# FASCICULE DE BREVET EUROPEEN

(11) **EP 2 354 713 B1**
(45) Date de publication et mention de la délivrance du brevet: **30.09.2015**
(21) Numéro de dépôt: 11150608.5
(22) Date de dépôt: 11.01.2011
(51) Int. Cl.: F24J 2/04, F24J 2/34, E04C 2/52, F24D 3/14, F24D 3/18, F24D 11/00, F24D 15/02, F24J 2/26, F24J 2/46, F24J 2/32, F24J 2/44

(54) **Système solaire thermique pour chauffer un espace habitable.**
Solarwärmesystem zum Beheizen eines Wohnraums
Thermal solar system for heating a habitable space.

(30) Priorité: 15.01.2010 FR 1050281
(43) Date de publication de la demande: 10.08.2011
(73) Titulaire: Electricité de France (EDF), 75008 Paris (FR)
(72) Inventeur: Amy de la Breteque, Emmanuel, 75012 Paris (FR); Duforestel, Thierry, 77250 Moret sur Loing (FR); Milleville, Pierre-Henri, 77670 Vernou La Celle (FR)
(74) Mandataire: Cabinet Plasseraud

(56) Documents cités:
- EP-A1- 0 455 184
- EP-A1- 0 582 730
- DE-A1- 2 721 467
- FR-A1- 2 537 256
- US-A- 4 083 490
- US-A- 4 382 437

## Description

L'invention se rapporte à un système solaire thermique pour chauffer un espace habitable.

En particulier, l'invention se rapporte à un système solaire thermique pour chauffer un espace habitable, comprenant :
- un élément de paroi destiné à être incorporé dans une paroi d'un bâtiment délimitant l'espace habitable, l'élément de paroi présentant des première et deuxième faces opposées et comportant intérieurement un logement ouvert sur la première face, la première face étant destinée à être exposée au rayonnement solaire,
- au moins un capteur solaire thermique comprenant une conduite de récupération thermiquement conductrice, adaptée pour recevoir un fluide caloporteur et portant extérieurement une surface d'absorption du rayonnement solaire, le capteur solaire thermique étant placé à l'intérieur du logement avec la surface d'absorption sur la première face de l'élément de paroi, le capteur solaire thermique comprenant en outre un organe de stockage d'énergie thermique placé dans le logement de l'élément de paroi en contact avec la conduite de récupération à l'opposé de la surface d'absorption,
- au moins un émetteur de chaleur adapté pour recevoir le fluide caloporteur et connecté (directement ou indirectement) au capteur solaire thermique, l'émetteur de chaleur s'étendant sur la deuxième face de l'élément de paroi.

On connaît, notamment du document DE 27 21 467, des systèmes solaires thermiques de ce type qui permettent d'intégrer les fonctions énergétiques de récupération (captation, conversion) et de diffusion de l'énergie thermique issue du rayonnement solaire à l'élément de paroi capable de supporter les contraintes mécaniques et environnementales liées à son intégration dans la paroi, notamment l'enveloppe extérieure, du bâtiment, de sorte à pouvoir valoriser l'apport en rayonnement solaire sur des parties opaques du bâtiment.

Or le rayonnement solaire n'est généralement pas en phase avec les besoins en chauffage du bâtiment de sorte qu'il est nécessaire d'avoir recours à des systèmes de chauffage d'appoint qui fonctionnent en l'absence de rayonnement solaire ou lorsque le rayonnement solaire est insuffisant. En outre, les systèmes solaires thermiques connus n'offrent pas une capacité d'intégration à la paroi du bâtiment satisfaisante.

L'invention vise à pallier les problèmes évoqués ci-dessus.

A cet effet, l'invention propose un système solaire thermique du type précité dans lequel la conduite de récupération comporte une entrée et une sortie noyées dans l'élément de paroi, la sortie de la conduite de récupération débouchant sur une première surface de connexion de l'élément de paroi, et l'entrée de la conduite de récupération débouchant sur une deuxième surface de connexion de l'élément de paroi.

Ainsi, le système solaire thermique selon l'invention intègre en outre la fonction énergétique de stockage d'énergie thermique qui permet de restituer l'énergie thermique issue du rayonnement solaire, y compris en l'absence de rayonnement solaire ou lorsque le rayonnement solaire est insuffisant. Il est ainsi possible de pallier l'intermittence du rayonnement solaire et d'améliorer l'adéquation entre l'apport en rayonnement solaire et les besoins en chauffage.

Par ailleurs, l'agencement intégré de l'organe de stockage dans l'élément de paroi présente l'avantage d'une conception compacte du système solaire thermique combinant les fonctions structurelles et l'ensemble des fonctions énergétiques (captation, conversion, stockage et diffusion). Chaque élément de paroi peut, en outre, constituer un module qui peut être utilisé de manière autonome ou en combinaison avec d'autres modules analogues. L'adaptabilité, la capacité d'intégration à la paroi du bâtiment et la modularité du système solaire thermique s'en trouvent améliorées.

Dans un mode de réalisation, le logement peut être ouvert sur la deuxième face de l'élément de paroi, l'émetteur de chaleur étant placé en regard et à distance de l'organe de stockage, le système solaire thermique comprenant en outre une couche d'isolation thermique interposée entre l'organe de stockage et l'émetteur de chaleur.

En particulier, les première et deuxième surfaces de connexion peuvent être opposées l'une par rapport à l'autre et s'étendre entre les première et deuxième faces de l'élément de paroi.

Le système solaire thermique peut alors comprendre au moins un premier et un deuxième éléments de paroi, au moins un premier et un deuxième capteurs solaires thermiques placés respectivement dans les logements des premier et deuxième éléments de paroi, et au moins un émetteur de chaleur s'étendant sur au moins l'une des deuxièmes faces des premier et deuxième éléments de paroi, la première surface de connexion du premier élément de paroi étant en contact avec la deuxième surface de connexion du deuxième élément de paroi, la sortie de la conduite de récupération du premier capteur solaire thermique étant connectée à l'entrée de la conduite de récupération du deuxième capteur solaire thermique.

Par ailleurs, l'émetteur de chaleur peut comporter une entrée et une sortie noyées dans l'élément de paroi, l'entrée de l'émetteur de chaleur débouchant sur la première surface de connexion de l'élément de paroi, et la sortie de l'émetteur de chaleur débouchant sur la deuxième surface de connexion de l'élément de paroi.

L'organe de stockage peut être adapté pour réaliser un stockage thermique sensible, auquel cas l'organe de stockage peut présenter une chaleur spécifique comprise entre 800 J/Kg.K et 1500 J/Kg.K, ou être adapté pour réaliser un stockage thermique latent, auquel cas l'organe de stockage peut être constitué d'un matériau à changement de phase présentant une température de fusion comprise entre 15 °C et 45°C et une chaleur latente de fusion comprise entre50 kJ/kg et 250 kJ/kg.

De manière complémentaire ou indépendante des dispositions précédentes, l'élément de paroi peut présenter une surface intérieure délimitant le logement, la surface intérieure comprenant au moins localement une surface réfléchissante agencée pour orienter le rayonnement solaire qui atteint ladite surface réfléchissante vers la surface d'absorption.

On peut, en outre, prévoir que le système solaire thermique comprenne une paroi transparente au rayonnement solaire et isolante thermiquement placée sur la face avant de l'élément de paroi, en regard de la surface d'absorption du capteur solaire thermique.

Par ailleurs, l'élément de paroi peut comprendre une couche d'isolation thermique sur la première face, autour du logement.

Dans un mode de réalisation pouvant mettre en oeuvre une ou plusieurs des dispositions précédentes, la conduite de récupération et l'émetteur de chaleur peuvent comporter chacun une entrée et une sortie pour le fluide caloporteur, le système solaire thermique pouvant comprendre en outre :
- un fluide caloporteur,
- une pompe à chaleur qui comporte deux échangeurs formant l'un un évaporateur, et l'autre un condenseur,
- un circuit d'air extérieur,
- un circuit d'air intérieur,
- un circuit de diffusion adapté pour recevoir le fluide caloporteur et commandé pour :
- dans un fonctionnement en chauffage solaire, lorsque le fluide caloporteur en sortie de la conduite de récupération présente une température supérieure à une température de consigne pour le fluide caloporteur (c'est-à-dire une température de départ du fluide caloporteur pour le chauffage par l'émetteur de chaleur, déterminée notamment par une loi d'eau), connecter la sortie de la conduite de récupération à l'entrée de l'émetteur de chaleur, connecter la sortie de l'émetteur de chaleur à l'entrée de la conduite de récupération, et faire circuler le fluide caloporteur de sorte à transférer à l'émetteur de chaleur une énergie thermique absorbée par la surface d'absorption,
- dans un fonctionnement en chauffage thermodynamique, lorsque le fluide caloporteur en sortie de la conduite de récupération présente une température située dans une plage prédéfinie de températures inférieures à la température de consigne pour le fluide caloporteur,
si l'organe de stockage présente une température supérieure à la température du fluide caloporteur en sortie de la conduite de récupération et si la température de l'organe de stockage est supérieure ou égale à une température extérieure à l'extérieur de l'espace habitable, connecter la sortie de la conduite de récupération à l'entrée de la conduite de récupération au travers de l'évaporateur de la pompe à chaleur, connecter le condenseur de la pompe à chaleur au circuit d'air intérieur, et faire circuler le fluide caloporteur de sorte à transférer à l'air intérieur une énergie thermique stockée dans l'organe de stockage,
sinon, si l'organe de stockage présente une température inférieure à la température du fluide caloporteur en sortie de la conduite de récupération ou si la température de l'organe de stockage est inférieure à la température extérieure, connecter l'évaporateur de la pompe à chaleur au circuit d'air extérieur, et connecter la sortie de l'émetteur de chaleur à l'entrée de l'émetteur de chaleur au travers du condenseur de la pompe à chaleur, de sorte à transférer à l'émetteur de chaleur l'énergie thermique prélevée dans l'air extérieur.

Dans le mode de réalisation qui vient d'être décrit, le circuit de diffusion peut en outre être commandé pour, dans un fonctionnement en chauffage thermodynamique d'appoint, lorsque le fluide caloporteur en sortie de la conduite de récupération présente une température située dans une plage prédéfinie de températures inférieures et proches de la température de consigne pour le fluide caloporteur, connecter l'évaporateur de la pompe à chaleur au circuit d'air extérieur, connecter la sortie de la conduite de récupération à l'entrée de l'émetteur de chaleur au travers du condenseur de la pompe à chaleur, connecter la sortie de l'émetteur de chaleur à l'entrée de la conduite de récupération, et faire circuler le fluide caloporteur de sorte à transférer à l'émetteur de chaleur l'énergie thermique absorbée par la surface d'absorption et l'énergie thermique prélevée dans l'air extérieur.

D'autres objets et avantages de l'invention apparaîtront à la lecture de la description qui suit, faite en référence aux dessins annexés dans lesquels :
- la figure 1 est une représentation schématique en coupe d'un système solaire thermique selon un premier mode de réalisation, illustrant un élément de paroi sous la forme d'un panneau, un capteur solaire thermique placé dans un logement de l'élément de paroi, et un émetteur de chaleur monté sur l'élément de paroi,
- la figure 2 est une représentation schématique en coupe du système solaire thermique selon une première variante du premier mode de réalisation de la figure 1, dans laquelle l'élément de paroi est pourvu d'une couche d'isolation thermique sur une face exposée au rayonnement solaire,
- la figure 3 est une représentation schématique en coupe du système solaire thermique selon une deuxième variante du premier mode de réalisation de la figure 1, dans laquelle le logement de l'élément de paroi est délimité par une surface intérieure dont une partie est réfléchissante,
- les figures 4A et 4B sont des représentations en perspective du système solaire thermique selon une troisième variante du premier mode de réalisation de la figure 1, dans laquelle l'élément de paroi se présente sous la forme d'une brique, les figures 4A et 4B illustrant respectivement le système solaire thermique comprenant une brique et un assemblage de briques,
- la figure 5 est une représentation schématique en coupe d'un mode de réalisation du capteur solaire thermique du système solaire thermique de la figure 1,
- les figures 6A, 6B et 6C sont des représentations agrandies du détail référencé VI sur la figure 5,
- la figure 7 est une représentation du champ de température en régime établi avec une circulation de fluide caloporteur dans le capteur solaire thermique de la figure 5,
- la figure 8 est un graphe illustrant la répartition du flux solaire incident sur le capteur solaire thermique de la figure 5 entre un organe de stockage d'énergie thermique et le fluide caloporteur,
- la figure 9 est une représentation du champ de température après trois heures d'ensoleillement avec le fluide caloporteur stagnant dans le capteur solaire thermique de la figure 5,
- la figure 10 est une représentation du champ de température en décharge de l'organe de stockage du capteur de la figure 5,
- la figure 11 est une représentation schématique en coupe d'un système solaire thermique selon un deuxième mode de réalisation,
- les figures 12, 13, 14 et 15 sont des représentations de différents modes de fonctionnement du système solaire thermique de la figure 11,
- la figure 16 est une représentation schématique en coupe du système solaire thermique selon une variante du deuxième mode de réalisation de la figure 11.

Sur les figures, les mêmes références désignent des éléments identiques ou analogues.

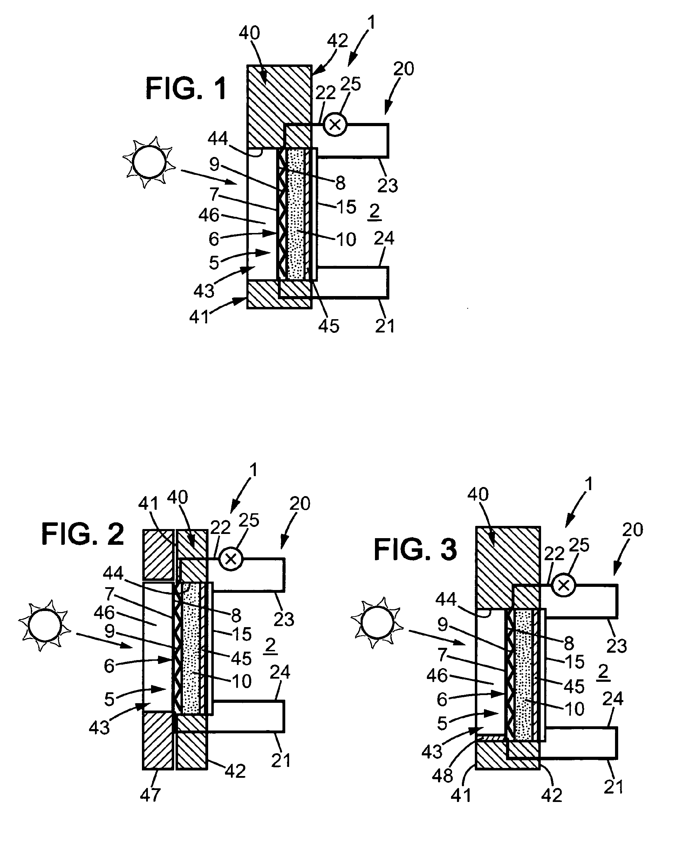

La figure 1 représente schématiquement un premier mode de réalisation d'un système solaire thermique 1 adapté pour chauffer un espace habitable 2 dans un bâtiment à partir du rayonnement solaire.

Le système solaire thermique 1 comprend un capteur solaire thermique 5 dont la fonction est de convertir le rayonnement solaire en énergie thermique et de rendre disponible cette énergie thermique, directement ou indirectement comme il apparaîtra dans la suite de la description, à un émetteur de chaleur 15 dont la fonction est de dissiper l'énergie thermique sous forme de chaleur.

En particulier, afin de convertir le rayonnement solaire en énergie thermique, le capteur solaire thermique 5 comprend un absorbeur sous la forme d'une plaque d'absorption 6, par exemple généralement plane, en métal tel que du cuivre, qui présente une surface d'absorption 7 destinée à être exposée au rayonnement solaire et une surface d'échange 8 opposée à la surface d'absorption 7. La surface d'absorption 7 permet l'absorption du rayonnement solaire visible et peut, pour ce faire, être recouverte d'une couche appropriée, notamment sélective, c'est-à-dire absorbante dans le rayonnement visible et peu émissive dans le rayonnement infrarouge, comme des peintures noires, contenant éventuellement des particules de carbone, ou comme des dépôts surfaciques d'oxyde de chrome ou d'oxyde de titane.

Afin de pouvoir rendre l'énergie thermique disponible et notamment la transporter vers l'émetteur de chaleur 15, le capteur solaire thermique 5 comprend également un échangeur sous la forme d'une conduite de récupération 9 thermiquement conductrice recevant un fluide caloporteur, par exemple de l'eau mélangée à un adjuvant pour prévenir le gel, tel que du glycol dans une proportion de 15 % à 40 %. La conduite de récupération 9 comporte une entrée et une sortie pour le fluide caloporteur et présente une surface extérieure en contact avec la surface d'échange 8 de la plaque d'absorption 6. La conduite de récupération 9 est répartie sensiblement sur toute la surface d'échange 8. En particulier, la conduite de récupération 9 peut comprendre un tube métallique soudé à la surface d'échange de la plaque d'absorption 6. Le tube métallique peut présenter, par exemple, des portions droites de section circulaire, adjacentes et parallèles entre elles, et des portions coudées de section circulaire reliant deux portions droites adjacentes. En variante, la conduite de récupération 9 peut comprendre un tube réalisé en tout autre matériau adapté pour la conduction de chaleur et solidarisé à la plaque d'absorption 6 par tout moyen approprié.

La description du capteur solaire thermique 5 a été faite en relation avec une conduite de récupération 9 qui porte extérieurement la surface d'absorption 7 de manière indirecte, c'est-à-dire par l'intermédiaire d'une plaque d'absorption 6 avec laquelle la conduite de récupération 9 est en contact direct. En variante, notamment dans le cas où la conduite de récupération 9 présente une section polygonale, par exemple carrée ou rectangulaire, on pourrait prévoir que la conduite de récupération 9 elle-même porte extérieurement la surface d'absorption 7 de manière directe, c'est-à-dire qu'une partie de la surface extérieure de la conduite de récupération 9 forme la surface d'absorption 7. Dans cette variante, la conduite de récupération 9 forme à la fois l'absorbeur et l'échangeur.

Les dimensions de l'absorbeur et de l'échangeur sont adaptées en fonction du besoin de chauffage de l'espace habitable 2 à chauffer et en fonction de l'apport en rayonnement solaire. On peut, par exemple, prévoir que ces dimensions soient telles que le capteur solaire thermique 5 a une aire comprise de préférence entre 0,5 m² et 4 m². Par ailleurs, la plaque d'absorption 6 peut présenter une épaisseur comprise entre 1 mm et 5 mm et la conduite de récupération 9 peut comporter un tube métallique dont les sections droites sont espacées d'un entraxe compris entre 6 cm et 15 cm et la section présente un diamètre intérieur de 8 mm et un diamètre extérieur de 9 mm, ou un diamètre intérieur de 10 mm et un diamètre extérieur de 11 mm, ou un diamètre intérieur de 12 mm et un diamètre extérieur de 13 mm, ou un diamètre intérieur de 12 mm et un diamètre extérieur de 14 mm.

Par ailleurs, comme indiqué précédemment, le capteur solaire thermique 5 peut rendre disponible l'énergie thermique directement, en la transmettant directement à l'émetteur de chaleur 15, ou indirectement, en la transmettant à l'émetteur de chaleur 15 après l'avoir stockée.

Dans le mode de réalisation illustré, le capteur solaire thermique comprend alors un organe de stockage 10 d'énergie thermique en contact avec la surface extérieure de la conduite de récupération 9 à l'opposé de la surface d'absorption 7.

Selon les applications, l'organe de stockage peut être formé par une couche de matériau à forte capacité, adapté pour réaliser un stockage thermique sensible. L'organe de stockage 10 présente alors une chaleur spécifique comprise entre 800 J/Kg.K et 1500 J/Kg.K. Des exemples non limitatifs de matériaux pouvant réaliser ce type de stockage comprennent du béton ou de la brique.

En variante, l'organe de stockage 10 peut être une couche de matériau à changement de phase adapté pour réaliser un stockage thermique latent. L'organe de stockage 10 peut alors présenter une température de fusion comprise entre 15°C et 45°C, de préférence entre 25°C et 45°C, et une chaleur latente de fusion comprise entre 50 kJ/kg et 250 kJ/kg. Les matériaux à changement de phase présente une conductivité thermique de préférence entre 0,5 W/m.K et 1,5 W/m.K. Des exemples non limitatifs de matériaux pouvant réaliser ce type de stockage comprennent des paraffines.

L'organe de stockage 10 dont les dimensions sont identiques à celles de l'absorbeur et de l'échangeur présente une épaisseur qui est fonction du besoin en chauffage de l'espace habitable 2 à chauffer et fonction de l'autonomie souhaitée pour le capteur solaire thermique 5. Par exemple, l'organe de stockage 10 peut présenter une épaisseur comprise entre 2 cm et 7 cm.

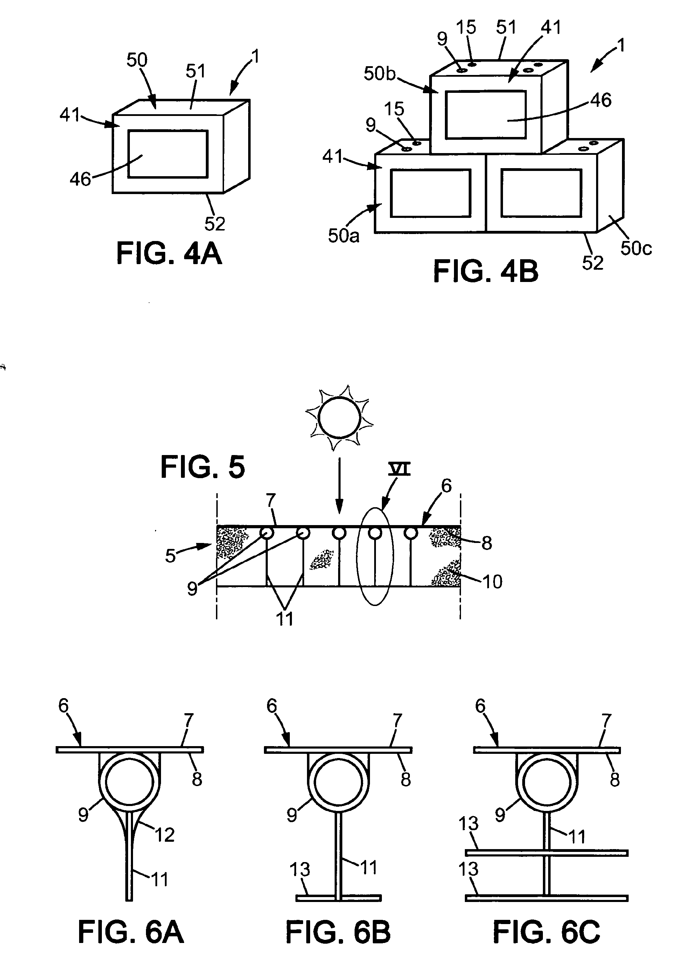

L'émetteur de chaleur 15 comporte une entrée et une sortie pour le fluide caloporteur et est adapté pour recevoir le fluide caloporteur. L'émetteur de chaleur 15 peut ainsi dissiper l'énergie thermique absorbée directement par la plaque d'absorption 6 ou puisée dans l'organe de stockage 10. Par exemple, l'émetteur de chaleur 15 est un émetteur à eau tel qu'un radiateur basse température. Un tel émetteur de chaleur 15 présente une puissance nominale à un ΔT (corps de chauffe - température intérieure) de 50°C telle que la température de départ au jour le plus froid n'excède pas 45°C ou 50°C. Les dimensions maximales de l'émetteur de chaleur 15 sont de préférence celles de l'absorbeur et de l'échangeur. Dans des modes de réalisation, comme par exemple dans un système solaire thermique modulaire tel que décrit plus loin en relation avec la figure 4B, l'émetteur de chaleur 15 peut, toutefois, présenter des dimensions maximales supérieures à celles de l'absorbeur et de l'échangeur.

L'émetteur de chaleur 15 est connecté au capteur solaire thermique 5 par l'intermédiaire d'un circuit de diffusion 20 dans lequel le fluide caloporteur peut circuler en circuit fermé. Comme il apparaîtra dans la suite de la description, bien que représenté sur la figure 1 comme connecté directement au capteur solaire thermique 5 par l'intermédiaire du circuit de diffusion 20, l'émetteur de chaleur 15 peut être connecté indirectement, notamment par l'intermédiaire d'un deuxième capteur solaire thermique 5, au capteur solaire thermique 5

En particulier, le circuit de diffusion 20 comprend des conduites d'entrée 21 et de sortie 22 de conduite de récupération connectées respectivement à l'entrée et à la sortie de la conduite de récupération 9, et des conduites d'entrée 23 et de sortie 24 d'émetteur de chaleur connectées respectivement à l'entrée et à la sortie de l'émetteur de chaleur. Sur la figure 1, la conduite de sortie 22 de conduite de récupération est connectée à la conduite d'entrée 23 d'émetteur de chaleur et la conduite de sortie 24 d'émetteur de chaleur est connectée à la conduite d'entrée 21 de conduite de récupération.

Le circuit de diffusion 20 comprend également un dispositif d'entraînement 25 du fluide caloporteur dans la conduite de récupération 9, l'émetteur de chaleur 15, ainsi que les conduites d'entrée 21 et de sortie 22 de conduite de récupération et les conduites d'entrée 23 et de sortie 24 d'émetteur de chaleur. Lorsqu'il est activé pour répondre à besoin de chauffage comme il ressortira ultérieurement de la description, le dispositif d'entraînement 25 peut, par exemple, imposer un débit compris entre 15 l/h et 45 l/h par m² d'absorbeur du capteur solaire thermique 5, notamment entre 20 l/h et 40 l/h par m² d'absorbeur. Le dispositif d'entraînement est par exemple monté sur la conduite de sortie 22 de conduite de récupération. Dans une application particulière permettant un fonctionnement en thermosiphon, en particulier lorsque le capteur solaire thermique 5 présente une hauteur suffisante, le dispositif d'entraînement 25 pourrait être remplacé par une vanne.

De nouveau, le dispositif d'entraînement 25 illustré sur la figure 1 comme connecté directement au capteur solaire thermique 5 et à l'émetteur de chaleur 15 peut, toutefois, l'être de manière indirecte par l'intermédiaire d'un ou plusieurs autres capteurs solaires thermiques 5 et émetteurs de chaleur 15.

Comme il apparaîtra au cours de la description faite plus loin d'un procédé de chauffage de l'espace habitable 2, la commande du circuit de diffusion 20 est réalisée à partir de différentes températures mesurées par le système solaire thermique 1. En cette fin, le système solaire thermique 1 comprend des capteurs de température adaptés pour mesurer des températures intérieure et extérieure respectivement à l'intérieur et à l'extérieur de l'espace habitable 2, une température du fluide caloporteur en sortie de la conduite de récupération 9, une température de la surface d'absorption 7, une température de l'organe de stockage 10 et une température d'entrée du fluide caloporteur dans la conduite de récupération 9. Les capteurs de température peuvent ainsi générer des données sous forme de signaux électriques représentatifs des températures. Le système solaire thermique 1 comprend alors une unité centrale dotée d'une mémoire et adaptée pour traiter ces données et commander un fonctionnement approprié du circuit de diffusion 20.

Comme visible sur la figure 1, le système solaire thermique comprend un élément de paroi, sous la forme d'un panneau 40, destiné à être incorporé dans une paroi du bâtiment délimitant l'espace habitable 2. La paroi du bâtiment peut notamment former une enveloppe extérieure du bâtiment. Le panneau 40 constituant un élément structurel du bâtiment auquel il est incorporé est donc adapté, notamment en termes de géométrie et de matériau, pour supporter les contraintes mécaniques et environnementales.

Dans le mode de réalisation, le panneau 40, réalisé par exemple en béton, terre cuite, métal, matériau plastique ou autre, a une forme généralement parallélépipédique. Le panneau 40 présente une première face 41, avant, destinée à être exposée au rayonnement solaire, et une deuxième face 42, arrière, opposée à la face avant 41. Le panneau 40 comporte intérieurement un logement 43, délimité par une surface intérieure 44 et ouvert sur les faces avant 41 et arrière 42.

La plaque d'absorption 6, la conduite de récupération 9 et l'organe de stockage 10 composant le capteur solaire thermique 5 dans le mode de réalisation représenté sont placés à l'intérieur du logement 43 avec la surface d'absorption 7 sur la face avant 41 du panneau 40. De cette manière, la surface d'absorption 7 peut capter le rayonnement solaire qui atteint la face avant 41 du panneau 40. L'entrée et la sortie de la conduite de récupération 9 peuvent alors être noyées dans le panneau 40 et déboucher respectivement sur des première et deuxième surfaces de connexion du panneau 40, situées, sur la figure 1, sur la face arrière 42 respectivement dans des parties inférieure et supérieure du panneau 40.

Sur la face avant 41 du panneau 40, dans le logement 43 en regard de la surface d'absorption 7, le système solaire thermique 1 comprend en outre une paroi transparente 46 au rayonnement solaire. La paroi transparente 46 peut être placée en contact avec la surface d'absorption 7. Si, toutefois, il existe un espace entre la paroi transparente 46 et la surface d'absorption 7, la couche recouvrant cette surface d'absorption 7 sera de préférence sélective.

La paroi transparente 46 est également isolante pour la conduction thermique et permet d'assurer une protection du capteur solaire thermique 5 vis à vis des contraintes mécaniques et environnementales. En particulier, la paroi transparente 46 peut être prévue pour permettre d'atteindre une résistance thermique entre la plaque d'absorption 6 et l'air extérieur de l'ordre de 1,5 m².K/W à 5 m².K/W. Par exemple, la paroi transparente 46 peut être constituée de :
- double vitrage, éventuellement sous argon ou sous vide, dont le coefficient de transmission thermique U est compris entre 0,8 W/m².K et 1,2 W/m².K pour une épaisseur maximale de 24 mm (soit une résistance thermique comprise entre 0,83 m².K/W et 1,25 m².K/W), le double vitrage pouvant être monté avec une couche sélective sur la face opposée au capteur solaire thermique 5, ou
- un simple vitrage séparé du capteur solaire thermique 5 par un espace mis sous vide, présentant une résistance thermique comprise entre 0,83 m².K/W et 1,25 m².K/W, ou
- un matériau isolant transparent ou isolant translucide, de conductivité thermique comprise entre 0,05 W/m.K et 0,1 W/m.K et d'épaisseur comprise entre 10 cm et 15 cm, équivalent à une résistance thermique comprise entre 1 m².K/W et 3 m².K/W.

Dans les cas du double vitrage ou du vitrage simple, le système solaire thermique 1 peut être complété pour une occultation solaire permettant de couper le rayonnement visible pour des hauteurs de soleil supérieures à environ 40°. En revanche, le matériau isolant transparent ou translucide peut posséder cette propriété de coupure du rayonnement visible en fonction de la hauteur du soleil de façon intrinsèque.

L'émetteur de chaleur 15 s'étend sur la face arrière 42 du panneau 40. L'émetteur de chaleur 15 est alors placé en regard et à distance de l'organe de stockage 10, une couche d'isolation thermique 45 étant interposée entre l'organe de stockage 10 et l'émetteur de chaleur 15. L'émetteur de chaleur 15 est préférentiellement jointif (sans lame d'air) à la couche d'isolation thermique 45. Toutefois, si l'épaisseur du système solaire thermique 1 est limitée par celle de la paroi du bâtiment, ou si la couche d'isolation thermique 45 doit présenter une épaisseur réduite, un espace de 1 cm à 5 cm peut être laissé libre entre l'émetteur de chaleur 15 et la couche d'isolation thermique 45.

La couche d'isolation thermique 45 vise à permettre une bonne régulation de l'utilisation du stockage d'énergie thermique dans l'organe de stockage 10. En particulier, en imposant une résistance thermique de 1 m².K/W minimum entre l'émetteur de chaleur 15 et l'organe de stockage 10, la couche d'isolation thermique 45 contribue à l'isolation du panneau 40 et permet de limiter les « courts-circuits » de flux de chaleur entre l'émetteur de chaleur 15 et l'organe de stockage 10. Cette couche d'isolation thermique 45 peut être réalisée en un matériau dont la conductivité thermique est comprise entre 0,035 et 0,045 W/m. K.

La couche d'isolation thermique 45 présente des dimensions identiques à celles de l'absorbeur et de l'échangeur du capteur solaire thermique 5, et une épaisseur maximale comprise entre 7 cm et 9 cm compte tenu des résistances thermiques minimales de l'organe de stockage 10 et de la paroi transparente 46. Pour pouvoir réduire l'épaisseur de la couche d'isolation thermique 45 et pour optimiser la gestion du stockage, un panneau isolant sous vide (PIV) de conductivité thermique de l'ordre de 0,005 W/m.K et d'épaisseur inférieure à 3 cm peut, par exemple, être mis en oeuvre.

Les épaisseurs de la paroi transparente 46, de la plaque d'absorption 6, de la conduite de récupération 9, de l'organe de stockage 10 et de la couche d'isolation thermique 45 sont telles que le système solaire thermique 1 réponde aux exigences de la réglementation thermique pour le neuf ou l'existant, le cas échéant, conduisant à une résistance thermique supérieure à 3 m².K/W.

Dans une première variante illustrée sur la figure 2, le panneau 40 comprend en outre une couche extérieure 47 d'isolation thermique sur la face avant 41, autour du logement 43. La couche extérieure 47 peut être appliquée dans le même plan que la paroi transparente 46. Cette couche extérieure 47, réalisée par exemple en laine de verre, en polystyrène ou autre, permet d'améliorer l'isolation thermique du panneau 40.

Dans une deuxième variante illustrée sur la figure 3, la surface intérieure 44 du logement 43 comprend au moins localement une surface réfléchissante 48 agencée pour orienter le rayonnement solaire qui l'atteint vers la surface d'absorption 7 du capteur solaire thermique 5. En particulier, le capteur solaire thermique 5, placé dans le logement 43 en retrait par rapport au bord du logement 43 sur la face avant 41, laisse une partie de la surface intérieure 44 libre. Sur cette partie libre, la surface réfléchissante 48 peut être placée perpendiculairement à la surface d'absorption 7. Cette disposition permet d'augmenter l'apport en rayonnement solaire sur le capteur solaire thermique 5.

Les figures 4A et 4B illustrent une troisième variante qui diffère principalement des variantes décrites précédemment en ce que l'élément de paroi se présente sous la forme d'une brique 50, les autres composants restant identiques.

En fonction des niveaux de température souhaitée dans l'espace habitable 2 (température de confort réglée ou déterminée en fonction des besoins en chauffage), la brique 50, tout comme le panneau 40 précédemment décrit, peut constituer un système solaire thermique autonome, représenté sur les figures 1 et 4A, ou un système solaire thermique modulaire, représenté sur la figure 4B et dans lequel plusieurs briques 50, ou plusieurs panneaux 40, sont connectées entre elles.

Dans une conception modulaire illustrée sur la figure 4B en relation avec des briques 50, chaque brique 50 présente des surfaces latérales supérieure 51 et inférieure 52 opposées s'étendant entre les première 41 et deuxième 42 faces. Comme pour la conduite de récupération 9, l'entrée et la sortie de l'émetteur de chaleur 15 sont noyées dans la brique 50. La sortie de la conduite de récupération 9 et l'entrée de l'émetteur de chaleur 15 débouchent sur la première surface de connexion, supérieure, réalisée sur la surface latérale supérieure 51 de la brique 50. Et l'entrée de la conduite de récupération 9 et la sortie de l'émetteur de chaleur 15 débouchent sur la deuxième surface de connexion, inférieure, réalisée sur la surface latérale inférieure 52 de la brique 50.

Le système solaire thermique 1 comprend alors au moins une première 50a et une deuxième 50b briques pourvues chacune du capteur solaire thermique 5, de l'émetteur de chaleur 15, de la couche d'isolation 45 et de la paroi transparent 46 tels que décrits ci-dessus. La surface de connexion supérieure de la première brique 50a est placée en contact avec la surface de connexion inférieure de la deuxième brique 50b de sorte que la sortie de la conduite de récupération 9 de la première brique 50a soit connectée à l'entrée de la conduite de récupération 9 de la deuxième brique 50b, et l'entrée de l'émetteur de chaleur 15 de la première brique 50a soit connectée à la sortie de l'émetteur de chaleur 15 de la deuxième brique 50b.

En outre, dans la variante illustrée sur la figure 4B, la conception modulaire prévoit que la deuxième brique 50b chevauche la première brique 50a et une troisième brique 50c. Cette conception est rendue possible par la juxtaposition, dans chacune des briques 50, de deux absorbeurs et deux échangeurs solaires contigus, de deux émetteurs de chaleur 15 contigus et de deux circuits de diffusion 20 en parallèle.

Chaque brique dispose ainsi de deux entrées et deux sorties pour le fluide caloporteur du côté de l'absorbeur et de l'échangeur, et de deux entrées et deux sorties du côté de l'émetteur de chaleur.

Comme il apparaît de la description qui vient d'être faite de la troisième variante, dans une conception modulaire, chaque brique 50 n'est pas nécessairement munie d'un dispositif d'entraînement 25. Le dispositif d'entraînement 25 peut faire circuler le fluide caloporteur dans un circuit hydraulique constitué par l'interconnexion de plusieurs briques 50. Deux modèles de brique, nourrice et collecteur hydrauliques en fonction de la présence ou non d'ouverture d'alimentation en fluide caloporteur pour d'autres briques adjacentes, peuvent alors être prévus. En outre, pour chaque brique 50, le capteur solaire thermique 5 peut également être connecté à l'émetteur de chaleur 15 par l'interconnexion de plusieurs briques 50.

Par ailleurs, on peut prévoir dans la conception modulaire du système solaire thermique qu'un émetteur de chaleur 15 soit commun à plusieurs ou à toutes les briques 50 (ou panneaux 40). Dans ce cas, seule la sortie de la conduite de récupération 9 de l'une des briques 50, située au-dessus des autres briques 50 avec lesquelles elle partage l'émetteur de chaleur 15, est connectée à l'entrée de l'émetteur de chaleur 15 et l'entrée de la conduite de récupération 9 de l'une des briques 50, située en-dessous des autres briques 50 avec lesquelles elle partage l'émetteur de chaleur 15, est connectée à la sortie de l'émetteur de chaleur 15.

Le système solaire thermique 1 selon le premier mode de réalisation présente de nombreux avantages.

Le système solaire thermique 1 permet de réaliser l'intégration d'un système solaire au bâtiment de sorte que les parois du bâtiment intègrent dans des éléments de paroi unique les fonctions structurelles (résistance aux contraintes mécaniques et environnementales) et énergétiques (captation, conversion, stockage et diffusion de l'énergie).

Le système solaire thermique 1 constitue localement une surface de paroi opaque susceptible de reprendre les contraintes mécaniques, simplifiant ainsi l'intégration architecturale des fonctions énergétiques que doivent reprendre les éléments de l'enveloppe du bâtiment et qui était généralement conçues comme des greffes, c'est-à-dire que les éléments ayant des fonctions énergétiques (isolation, systèmes) étaient rapportés sur l'enveloppe.

La compacité du système solaire thermique 1 qui permet d'en améliorer l'intégration à l'enveloppe du bâtiment offre des applications dans la construction de bâtiments neufs ainsi que dans la rénovation de bâtiments. Dans ce dernier cas, le système solaire thermique 1 est intégré à une paroi existante de la même manière que pour le percement et la pose d'un ouvrant, tel qu'une fenêtre.

Le système solaire thermique 1 offre également une bonne adaptabilité par le choix approprié des dimensions et de la conception autonome ou modulaire. Il peut en outre être préfabriqué.

Par ailleurs, le système solaire thermique permet de capter et de restituer au bâtiment l'apport en rayonnement solaire gratuit sur l'enveloppe, bien qu'étant opaque. On peut valoriser ainsi l'apport en rayonnement solaire sur les parties opaques de l'enveloppe du bâtiment. Ceci est particulièrement avantageux par rapport aux constructions antérieures dans lesquelles, l'apport en rayonnement solaire sur le bâtiment, bien que sensiblement supérieurs à ses besoins au cours d'une année, n'était rendu disponible qu'au travers des ouvrants, qui ne représentent généralement que 20 % à 60 % de la surface de l'enveloppe de sorte que les parois opaques, soit de 40 % à 80 % de la surface, ne contribuaient pas à l'utilisation de l'apport en rayonnement solaire par le bâtiment.

De plus, le système solaire thermique 1 offre une isolation thermique réduisant sensiblement le besoin en chaleur du bâtiment, lequel devient thermiquement actif.

En outre, la ressource solaire n'étant généralement pas en phase avec le besoin énergétique, le système solaire thermique intègre un stockage énergétique palliant l'intermittence de la ressource solaire et garantissant le confort des occupants.

Enfin, comme il apparaîtra plus loin en relation avec la description du procédé de chauffage, la structure simplifiée du système solaire thermique 1 permet d'en simplifier la régulation.

La figure 5 illustre un mode de réalisation du capteur solaire thermique 5 pouvant notamment être mis en oeuvre dans le système solaire thermique 1 décrit précédemment.

Comme décrit précédemment, le capteur solaire thermique 5 comprend l'absorbeur et l'échangeur sous la forme de la plaque d'absorption 6 et de la conduite de récupération 9, étant entendu que la conduite de récupération 9 peut former à la fois l'absorbeur et l'échangeur comme indiqué précédemment. Le capteur solaire thermique 5 comprend également l'organe de stockage 10.

Dans le mode de réalisation illustré, l'organe de stockage 10 recouvre la surface extérieure de la conduite de récupération 9 en laissant la surface d'absorption 7 découverte. En particulier, l'organe de stockage 10 entoure sensiblement la totalité de la surface extérieure du tube métallique constituant la conduite de récupération 9, à l'exception de la portion de surface extérieure solidarisée à la plaque d'absorption 6.

Par ailleurs, afin de favoriser les échanges conductifs dans toute l'épaisseur de l'organe de stockage 10, le capteur solaire thermique 5 comprend un ou plusieurs éléments de diffusion thermique s'étendant dans l'organe de stockage 10 depuis la surface extérieure de la conduite de récupération 9, à l'opposé de la surface d'absorption 7.

En particulier, comme visible sur la figure 6A, les éléments de diffusion thermique comprennent chacun une ailette métallique 11 présentant une base solidarisée, par exemple par soudage, à la surface extérieure du tube métallique de la conduite de récupération 9. Les ailettes métalliques 11 sont plongées dans la couche de matériau de l'organe de stockage 10 dans laquelle elles s'étendent, par exemple, selon une direction sensiblement perpendiculaire à la surface d'absorption 7 sur toute l'épaisseur de l'organe de stockage 10. Les ailettes métalliques 11 peuvent présenter une épaisseur comprise entre 0,5 mm et 2 mm et une longueur sensiblement identique à l'épaisseur de l'organe de stockage 10, à savoir entre 2 cm et 7 cm.

Afin d'optimiser l'échange thermique entre la conduite de récupération 9 et l'organe de stockage 10 et de maximiser le flux de chaleur pouvant passer de l'un à l'autre, un bulbe métallique 12 entre le tube métallique et la base de l'ailette métallique 11 peut être réalisé.

En variante éventuellement complémentaire, illustrée sur les figures 6B et 6C, il est possible d'augmenter la surface de conduction thermique déployée dans l'organe de stockage 10 au moyen d'une ou plusieurs extensions métalliques 13 qui s'étendent depuis l'ailette métallique 11 en formant un angle avec celle-ci. Sur la figure 6B, une extension métallique 13 s'étend perpendiculairement à l'ailette métallique 11, à une extrémité libre, opposée à la base. Sur la figure 6B, une deuxième extension métallique 13 s'étend perpendiculairement à l'ailette métallique 11, entre son extrémité libre et sa base.

Par rapport à des systèmes solaires thermiques connus dans lesquels la mise en oeuvre du stockage est réalisée dans un lieu distinct de celui de la mise en oeuvre de la conversion du rayonnement solaire, ce qui implique l'utilisation de deux échangeurs, le capteur solaire thermique 5 décrit précédemment permet de limiter le nombre d'échangeur dans le système solaire thermique. La compacité du système solaire thermique, ainsi que son potentiel d'intégration, mais également ses performances énergétiques, s'en trouvent améliorés.

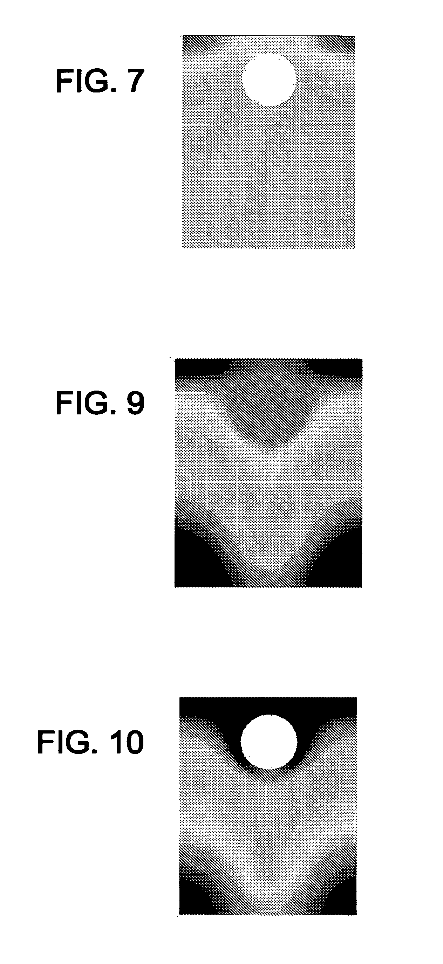

En relation avec les figures 7, 8, 9 et 10, on décrit le fonctionnement du capteur solaire thermique 5.

La figure 7 illustre le champ de température en régime établi avec une circulation du fluide caloporteur dans la conduite de récupération.

Le capteur solaire thermique 5 est dans un état d'utilisation directe dans lequel il est placé lorsqu'un rayonnement solaire suffisant atteint la surface d'absorption 7. Dans cet état, l'unité centrale commande le circuit de diffusion 20 pour faire circuler le fluide caloporteur dans la conduite de récupération 9. L'échange thermique entre le fluide caloporteur et la conduite de récupération 9 portant la surface d'absorption 7 prend le dessus sur les échanges thermiques possibles entre la conduite de récupération 9 et l'organe de stockage 10 et entre la plaque d'absorption 6 et l'air extérieur. Le fluide caloporteur emporte alors l'essentiel de l'énergie thermique captée par la surface d'absorption 7. L'organe de stockage 10 n'est pas ou peu alimenté et aucune conduction thermique réalisée par les ailettes métalliques 11 n'apparaît.

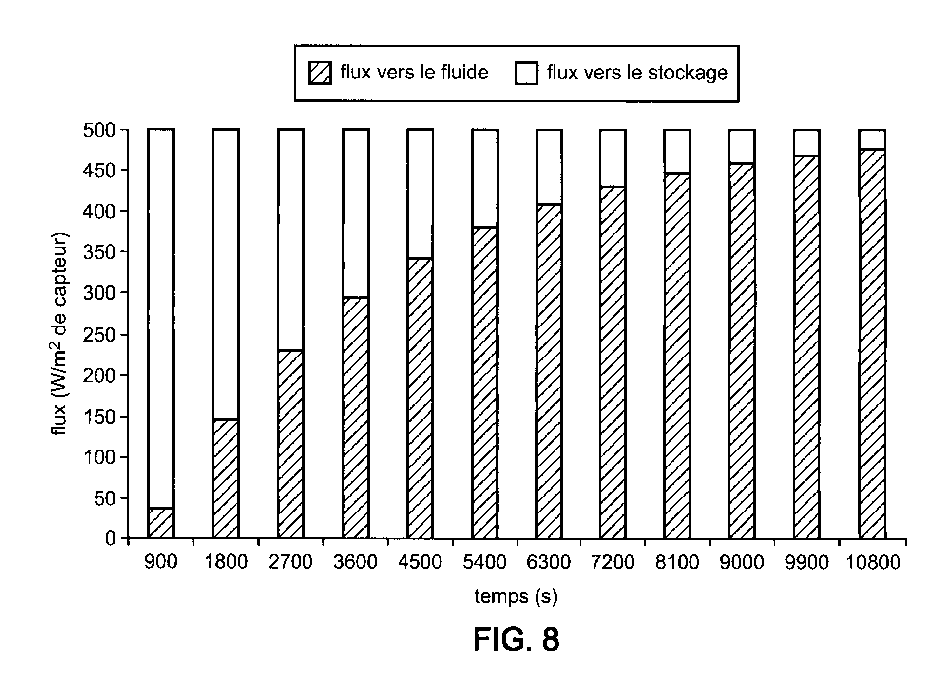

La figure 8 est un graphe illustrant la répartition du flux solaire incident sur la surface d'absorption 7 entre l'organe de stockage 10 et le fluide caloporteur, dans l'état d'utilisation directe du capteur solaire thermique. On peut notamment observer qu'après trois heures de fonctionnement dans l'état d'utilisation directe, environ 70 % de l'énergie thermique reçue par la plaque d'absorption 7 est transmise au fluide caloporteur et qu'environ 30% de l'énergie thermique est stockée dans l'organe de stockage 10. Il est à noter que le graphe de la figure 8 a été obtenu avec un organe de stockage initialement déchargé, la température du fluide caloporteur étant alors initialement égale à la température de l'organe de stockage 10 de sorte que le flux extrait est faible. Si l'organe de stockage 10 présente une température supérieure à celle du fluide caloporteur, le rapport entre l'énergie transportée par le fluide caloporteur et l'énergie stockée dans l'organe de stockage 10 sera plus favorable.

La figure 9 illustre le champ de température après trois heures d'ensoleillement avec le fluide caloporteur stagnant dans la conduite de récupération.

Le capteur solaire thermique 5 est dans un état de stockage. Dans cet état, l'unité centrale commande le circuit de diffusion 20 pour laisser le fluide caloporteur immobile à l'intérieur de la conduite de récupération 9. Le fluide caloporteur et la conduite de récupération 9 se comportent comme un ensemble homogène connecté à la plaque d'absorption 6 qui transmet l'énergie thermique absorbée vers l'organe de stockage 10 par l'intermédiaire de la surface d'échange 8 de la plaque d'absorption 6, la conduite de récupération 9 et les ailettes métalliques 11 comme il ressort des lignes de champ sur la figure 8.

La figure 10 illustre le champ de température en décharge de l'organe de stockage.

Le capteur solaire thermique 5 est dans un état de déstockage du capteur solaire thermique lorsque le rayonnement solaire est insuffisant. Dans cet état, l'unité centrale commande le circuit de diffusion 20 pour faire circuler le fluide caloporteur dans la conduite de récupération 9. L'énergie thermique stockée dans l'organe de stockage 10 est alors puisée notamment par l'intermédiaire des ailettes métalliques 11, comme le montrent les lignes de champ, et transférée au fluide caloporteur puis transportée vers un usage tel que l'émetteur de chaleur 15 dans le système solaire thermique 1 selon le premier mode de réalisation.

Il apparaît de la description qui vient d'être faite, que le capteur solaire thermique 5 se comporte comme un interrupteur d'énergie thermique ouvert, lorsque le fluide caloporteur est immobile dans la conduite de récupération 9, comme dans l'état de stockage, et fermé lorsque le fluide caloporteur circule dans la conduite de récupération 9, comme dans les états d'utilisation directe et de déstockage. Lorsqu'il est fermé, l'interrupteur permet de transférer de l'énergie thermique vers un système qui exploite cette énergie thermique. Lorsqu'il est ouvert, l'interrupteur permet de stocker l'énergie thermique.

Le capteur solaire thermique 5 décrit ci-dessus mis en oeuvre dans le système solaire thermique 1 selon le premier mode de réalisation permet de réaliser de manière simple une automatisation de la régulation du système solaire thermique 1 pour chauffer l'espace habitable 2. On décrit maintenant un procédé pour chauffer l'espace habitable 2 mettant en oeuvre le système solaire thermique 1 selon le premier mode de réalisation avec le capteur solaire thermique 5 précédemment décrit.

Après avoir exposé la surface d'absorption 7 au rayonnement solaire et mesuré la température extérieure à l'extérieur de l'espace habitable 2, la température intérieure à l'intérieur de l'espace habitable 2, la température de la surface d'absorption 7, la température de l'organe de stockage 10 et la température d'entrée du fluide caloporteur dans la conduite de récupération 9, l'unité centrale détermine s'il existe un besoin de chauffage.

Pour ce faire, l'unité centrale mesure l'écart entre la température intérieure et une température souhaitée pour le chauffage (température de confort) qui commande le fonctionnement du système solaire thermique en fonction des besoins en chauffage. Cette température souhaitée peut être soit réglée par un thermostat d'ambiance soit déterminée à partir de la température extérieure et d'une loi d'eau prédéfinie mémorisée dans la mémoire de l'unité centrale.

Lorsqu'il n'y a pas de besoin de chauffage, en particulier lorsque la température intérieure est supérieure, voire égale, à la température souhaitée, l'unité centrale commande le circuit de diffusion pour mettre le capteur solaire thermique 5 dans l'état de stockage, le fluide caloporteur étant immobile dans la conduite de récupération 9 et, si un apport solaire existe, l'énergie thermique étant stockée dans l'organe de stockage 10 .

En revanche, lorsque la température intérieure est inférieure à la température souhaitée et qu'il existe un besoin de chauffage, l'unité centrale détermine si la surface d'absorption 7 est exposée ou non à un rayonnement solaire.

En particulier, si la température de la surface d'absorption est supérieure à la température extérieure, la surface d'absorption 7 est exposée à un rayonnement solaire et l'unité centrale détermine si de l'énergie thermique peut être prélevée par le fluide caloporteur sur la plaque d'absorption 6.

De l'énergie thermique peut être prélevée par le fluide caloporteur sur la plaque d'absorption 6 lorsque la température d'entrée du fluide caloporteur est inférieure à la température de la surface d'absorption 7. Si tel est le cas, alors l'unité centrale commande le circuit de diffusion 20 pour mettre le capteur solaire thermique 5 dans l'état d'utilisation directe et faire circuler le fluide caloporteur dans la conduite de récupération 9 et l'émetteur de chaleur 15. L'énergie thermique absorbée par la surface d'absorption 7 est ainsi transférée à l'émetteur de chaleur 15.

Toutefois, si la température d'entrée du fluide caloporteur est supérieure à la température de la surface d'absorption 7, le fluide caloporteur ne peut pas prélever d'énergie thermique sur la plaque d'absorption 6 et l'unité centrale mesure l'écart entre la température d'entrée du fluide caloporteur et la température de l'organe de stockage 10 afin de déterminer si de l'énergie thermique peut être prélevée dans l'organe de stockage 10.

Si la température d'entrée du fluide caloporteur est inférieure à la température de l'organe de stockage 10, l'organe de stockage stocke de l'énergie thermique qu'il est possible de prélever en mettant le capteur solaire thermique 5 dans l'état de déstockage. L'unité centrale commande le circuit de diffusion 20 pour faire circuler le fluide caloporteur dans la conduite de récupération 9 et l'émetteur de chaleur 15 de sorte à transférer à l'émetteur de chaleur 15 l'énergie thermique stockée dans l'organe de stockage 10.

Si, toutefois, la température d'entrée du fluide caloporteur est supérieure à la température de l'organe de stockage 10, l'énergie thermique disponible dans l'organe de stockage 10 est épuisée ou insuffisante pour alimenter l'émetteur de chaleur 15. L'unité centrale commande le circuit de diffusion 20 pour mettre le capteur solaire thermique dans l'état de stockage et laisser le fluide caloporteur immobile à l'intérieur de la conduite de récupération 9 afin de stocker l'énergie thermique absorbée par la plaque d'absorption 6.

En revanche, si la température de la surface d'absorption 7 est inférieure à la température extérieure, la surface d'absorption 7 n'est pas exposée à un rayonnement solaire et l'unité centrale mesure l'écart entre la température d'entrée du fluide caloporteur et la température de l'organe de stockage 10.

Si la température d'entrée du fluide caloporteur est inférieure à la température de l'organe de stockage 10, il existe de l'énergie thermique dans l'organe de stockage 10 qui peut être prélevée en mettant le capteur solaire thermique 5 dans l'état de déstockage. Pour ce faire, l'unité centrale commande le circuit de diffusion 20 pour faire circuler le fluide caloporteur dans la conduite de récupération 9 et l'émetteur de chaleur 15 de sorte à transférer à l'émetteur de chaleur 15 l'énergie thermique stockée dans l'organe de stockage 10.

Si la température d'entrée du fluide caloporteur est supérieure à la température de l'organe de stockage 10, alors il n'y a pas d'énergie thermique à prélever sur la plaque d'absorption ni d'énergie thermique stockée dans l'organe de stockage 10. On peut alors mettre le capteur solaire thermique dans l'état de stockage. Pour ce faire, l'unité centrale commande le circuit de diffusion 20 pour laisser le fluide caloporteur immobile à l'intérieur de la conduite de récupération 9.

La description du capteur solaire thermique 5 des figures 5 et 6 a été faite en relation avec le système solaire thermique 1 de chauffage. Le capteur solaire thermique 5 n'est toutefois pas limité à une telle application et peut être utilisé dans d'autres applications dans lesquels il n'est pas couplé à un émetteur de chaleur ou il n'est pas intégré dans un élément de paroi. Le capteur solaire thermique 5 peut, par exemple, être utilisé dans une installation d'eau chaude sanitaire. Dans d'autres modes de réalisation, le capteur solaire thermique 5 peut également servir d'échangeur pour la source froide d'une pompe à chaleur qui comporte deux échangeurs formant l'un un évaporateur, et l'autre un condenseur, et un réfrigérant circulant entre l'évaporateur et le condenseur. Le capteur solaire thermique 5 peut alors constituer l'évaporateur de la pompe à chaleur et le fluide caloporteur est le réfrigérant (fonctionnement en détente directe). On peut, toutefois, prévoir d'introduire un échangeur entre le capteur solaire thermique 5 et l'évaporateur de la pompe à chaleur.

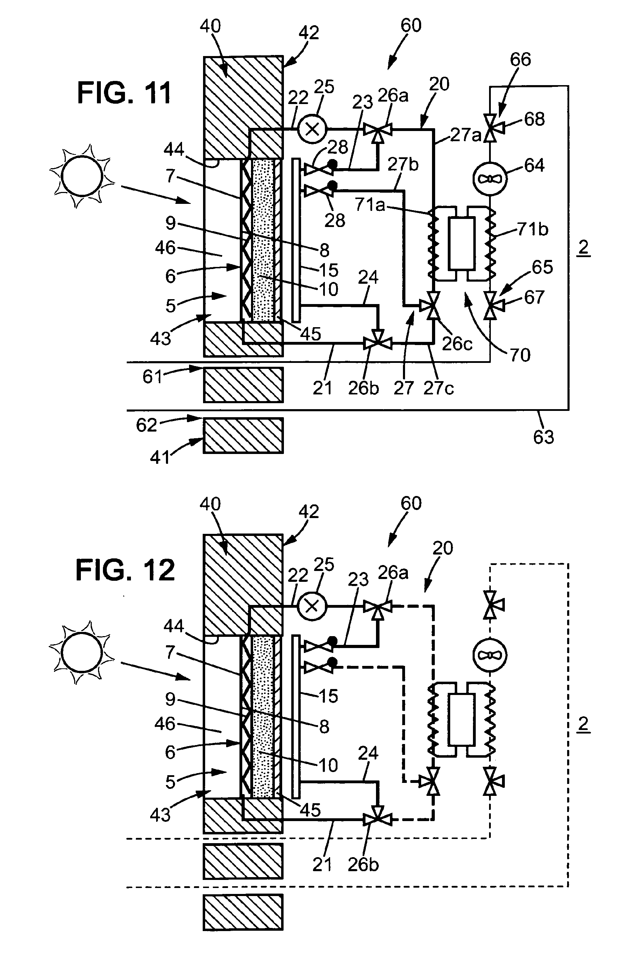

La figure 11 représente un système solaire thermique 60 pour chauffer l'espace habitable 2 selon un deuxième mode de réalisation.

Dans le deuxième mode de réalisation illustré, le système solaire thermique 60 met en oeuvre des composants analogues à ceux du premier mode de réalisation décrit précédemment en relation avec les figures. Pour plus de détails sur les composants analogues, à savoir le capteur solaire thermique 5, l'émetteur de chaleur 15, le circuit de diffusion 20, le panneau 40, la paroi transparente 46 et la couche d'isolation 45, on se référera à la description faite précédemment.

Le système solaire thermique 60 selon le deuxième mode de réalisation diffère du premier mode de réalisation principalement en ce qu'il comprend une pompe à chaleur 70 couplée au capteur solaire thermique 5 et à l'émetteur de chaleur 15, un circuit d'air intérieur et un circuit d'air extérieur.

Le circuit d'air extérieur comprend une bouche d'entrée d'air 61 et une bouche de sortie d'air 62 ménagées dans le panneau 40, une gaine de circulation d'air 63 reliant entre elles les bouches d'entrée 61 et de sortie 62 d'air, et un ventilateur 64 agencé pour faire circuler l'air extérieur dans la gaine de circulation d'air 63 à un débit fixé par les caractéristiques de la pompe à chaleur 70. La bouche d'entrée d'air 61 peut présenter une section carrée de 10 cm ou 25 cm de côté en fonction du débit d'air nécessaire pour répondre au besoin en chauffage de l'espace habitable 2. Le ventilateur 64 peut imposer un débit d'air compris entre 200 m³/h et 350 m³/h lorsque la pompe à chaleur 70 fonctionne.

Le circuit d'air intérieur comprend une vanne de reprise d'air 65 montée sur une portion de la gaine de circulation d'air 63 comprenant le ventilateur 64, et une vanne de rejet d'air 66 montée sur la portion de la gaine de circulation d'air 63. La vanne de reprise d'air 65 est pourvue d'une bouche de reprise d'air intérieur 67 et la vanne de rejet d'air 66 est pourvue d'une bouche de soufflage d'air chaud 68.

La pompe à chaleur 70 comporte deux échangeurs 71 formant l'un un évaporateur, et l'autre un condenseur, et un réfrigérant circulant entre les échangeurs. En particulier, la pompe à chaleur 70 est dite réversible dans la mesure où chacun des échangeurs 71 peut tour à tour devenir l'évaporateur et le condenseur. En particulier, la pompe à chaleur 70 comprend un premier échangeur 71 a et un deuxième échangeur 71 b qui est en contact avec la portion de la gaine de circulation d'air 63 entre les vannes de reprise 65 et de rejet 66 d'air.

Par ailleurs, lorsque, comme illustré sur la figure 11, le dispositif d'entraînement 25 est monté sur la conduite de sortie 22 de conduite de récupération, un autre dispositif d'entraînement 70 peut être intégré à la pompe à chaleur pour permettre faire circuler le fluide caloporteur dans le circuit de diffusion 20 lorsque la conduite de sortie 22 de conduite de récupération est déconnectée du circuit de circulation du fluide caloporteur. Il est, par ailleurs, rappelé ici qu'un fonctionnement en thermosiphon du système solaire thermique est possible.

Afin de pouvoir coupler la pompe à chaleur 70 au capteur solaire thermique 5 et à l'émetteur de chaleur 15, le circuit de diffusion 20 comprend une conduite de dérivation 27 traversant le premier échangeur 71 a de la pompe à chaleur 70.

Le circuit de diffusion 20 comprend une première vanne trois voies 26a agencée de telle manière que :
- la conduite de sortie 22 de conduite de récupération est connectée, d'une part, à la sortie de la conduite de récupération 9 et, d'autre part, à une première voie de la première vanne trois voies 26a, et
- la conduite d'entrée 23 d'émetteur de chaleur est connectée, d'une part, à l'entrée de l'émetteur de chaleur 15 et, d'autre part, à une deuxième voie de la première vanne trois voies 26a.

Le circuit de diffusion 20 comprend une deuxième vanne trois voies 26b agencée de telle manière que :
- la conduite d'entrée 21 de conduite de récupération est connectée, d'une part, à l'entrée de la conduite de récupération 9 et, d'autre part, à une première voie de la deuxième vanne trois voies 26b, et
- la conduite de sortie 24 d'émetteur de chaleur est connectée, d'une part, à la sortie de l'émetteur de chaleur 15 et, d'autre part, à une deuxième voie de la deuxième vanne trois voies 26b.

La conduite de dérivation 27 comporte :
- une troisième vanne trois voies 26c,
- une première portion 27a en contact avec le premier échangeur 71 a de la pompe à chaleur 70 et connectée, d'une part, à une troisième voie de la première vanne trois voies 26a et, d'autre part, à une première voie de la troisième vanne trois voies 26c,
- une deuxième portion 27b connectée, d'une part, à une deuxième voie de la troisième vanne trois voies 26c et, d'autre part, à l'entrée de l'émetteur de chaleur 15, et
- une troisième portion 27c connectée, d'une part, à la troisième voie de la deuxième vanne trois voies 26b et, d'autre part, à la troisième voie de la troisième vanne trois voies 26c.

Comme il apparaîtra dans ce qui suit, les première, deuxième et troisième vannes trois voies sont commandées par l'unité centrale.

Pour s'assurer du sens de circulation du fluide caloporteur dans le circuit de diffusion 20 vers l'entrée de l'émetteur de chaleur 15, des clapets anti-retours 28 sont prévus dans la conduite d'entrée 23 d'émetteur de chaleur et dans la deuxième portion 27b de la conduite de dérivation.

En relation avec les figures 12, 13, 14 et 15, on décrit maintenant un procédé pour chauffer l'espace habitable mettant en oeuvre le système solaire thermique 60 selon le deuxième mode de réalisation.

Dans une étape préalable, on mesure la température du fluide caloporteur en sortie de la conduite de récupération 9, et on détermine une température de consigne pour le fluide caloporteur. La température de consigne correspond à la température de départ du fluide caloporteur pour le chauffage par l'émetteur de chaleur. En particulier, l'unité centrale peut être adaptée pour calculer la température de consigne, c'est-à-dire la température de départ du fluide caloporteur nécessaire pour que l'émetteur de chaleur puisse fournir la chaleur suffisante, à partir de la température extérieure, de la température souhaitée à l'intérieur de l'espace habitable 2 et d'une loi d'eau prédéfinie mémorisée dans la mémoire. La loi d'eau, réglée lors de la mise en service du système solaire thermique 60 notamment en fonction des déperditions de l'espace habitable 2 et de la puissance nominale et des dimensions de l'émetteur de chaleur 15, relie en effet la température de départ du fluide caloporteur nécessaire à l'entrée de l'émetteur de chaleur 15 pour satisfaire le besoin en chauffage, et la température extérieure.

Sur la figure 12, s'il existe un rayonnement solaire suffisant, le capteur solaire thermique 5 fourni une énergie thermique suffisante et une température d'eau suffisante pour couvrir les besoins de chauffage directement par l'émetteur de chaleur 15. Ceci est détecté par l'unité centrale lorsque la température du fluide caloporteur en sortie de la conduite de récupération 9 est supérieure à la température de consigne. L'unité centrale met alors le système solaire thermique 60 dans un fonctionnement en chauffage solaire dans lequel on absorbe l'énergie thermique par la surface d'absorption 7 du capteur solaire thermique 5 et on transfère à l'émetteur de chaleur 15 l'énergie thermique absorbée.

Pour ce faire, on se ramène au système solaire thermique 1 selon le premier mode de réalisation en commandant, au moyen de l'unité centrale, les première 26a et deuxième 26b vannes trois voies pour qu'elles connectent la conduite de sortie 22 de conduite de récupération à la conduite d'entrée 23 d'émetteur de chaleur, et la conduite de sortie 24 d'émetteur de chaleur à la conduite d'entrée 21 de conduite de récupération.

Le dispositif d'entraînement 25 commandé par l'unité centrale fait circuler le fluide caloporteur en circuit fermé entre la conduite de récupération 9, la conduite de sortie 22 de conduite de récupération, la conduite d'entrée 23 d'émetteur de chaleur, l'émetteur de chaleur 15, la conduite de sortie 24 d'émetteur de chaleur, la conduite d'entrée 21 de conduite de récupération.

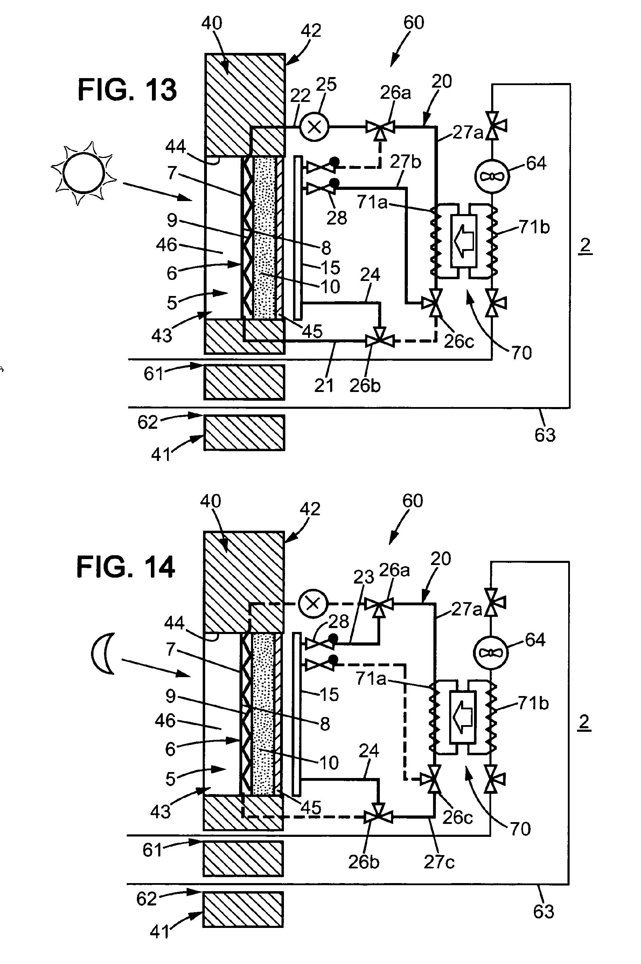

Sur figure 13, en cas de faible ensoleillement, par exemple quelques heures après le lever ou avant le coucher du soleil, la température du fluide caloporteur en sortie de la conduite de récupération 9 ne permet pas la distribution de chaleur dans l'espace habitable 2. Un appoint apporté par la pompe à chaleur 70 est alors nécessaire. Une telle situation peut être détectée par l'unité centrale lorsque la température du fluide caloporteur en sortie de la conduite de récupération 9 est située dans une première plage prédéfinie de températures inférieures et proches de la température de consigne. Cette première plage de températures peut être mémorisée dans la mémoire de l'unité centrale. Par exemple, la première plage de températures comprend des températures inférieures de moins de 7°C par rapport à la température de consigne, notamment de moins de 3°C par rapport à la température de consigne.

Lorsque cette situation est détectée, l'unité centrale met le système solaire thermique 60 dans un fonctionnement en chauffage thermodynamique d'appoint dans lequel on absorbe l'énergie thermique par la surface d'absorption 7, on prélève une énergie thermique dans l'air extérieur par la pompe à chaleur 70 et on transfère à l'émetteur de chaleur 15 l'énergie thermique absorbée et l'énergie thermique prélevée.

Pour ce faire, le deuxième échangeur 71 b de la pompe à chaleur constitue l'évaporateur qui va prélever de l'énergie thermique à l'air extérieur comme source froide. L'air extérieur entre par la bouche d'entrée d'air 61, est mis en circulation dans la gaine de circulation d'air 63 au moyen du ventilateur 64 puis est évacué par la bouche de soufflage d'air 62 après que le réfrigérant de la pompe à chaleur 70 lui a prélevé l'énergie thermique dans l'évaporateur.

Le premier échangeur 71 a de la pompe à chaleur constitue le condenseur.

L'unité centrale commande la première vanne trois voies 26a pour qu'elle connecte la conduite de sortie 22 de conduite de récupération 9 à la première portion 27a de la conduite de dérivation. La deuxième vanne trois voies 26b est, quant à elle, commandée pour connecter la conduite de sortie 24 d'émetteur de chaleur à la conduite d'entrée 21 de conduite de récupération. Quant à la troisième vanne trois voies 26c, elle est commandée pour connecter les première 27a et deuxième 27b portions de la conduite de dérivation.

L'unité centrale commande ensuite le dispositif d'entraînement 25 pour faire circuler le fluide caloporteur dans la conduite de récupération 9 puis dans la conduite de sortie 22 de conduite de récupération et dans la première portion 27a de conduite de dérivation où le fluide caloporteur comme source chaude préchauffé par le capteur solaire thermique 5 prélève l'énergie thermique au réfrigérant de la pompe à chaleur 70 lors de son passage dans le condenseur formé par le premier échangeur 71 a. On fait ensuite circuler le fluide caloporteur dans la deuxième portion 27b de la conduite de dérivation puis dans l'émetteur de chaleur 15, la conduite de sortie 24 d'émetteur de chaleur, la conduite d'entrée 21 de conduite de récupération et, à nouveau dans la conduite de récupération 9.

Le système thermodynamique que constitue la pompe à chaleur 70 est, dans le mode de réalisation décrit, utilisé en appoint du capteur solaire thermique 5, lequel réalise un préchauffage de la source chaude.

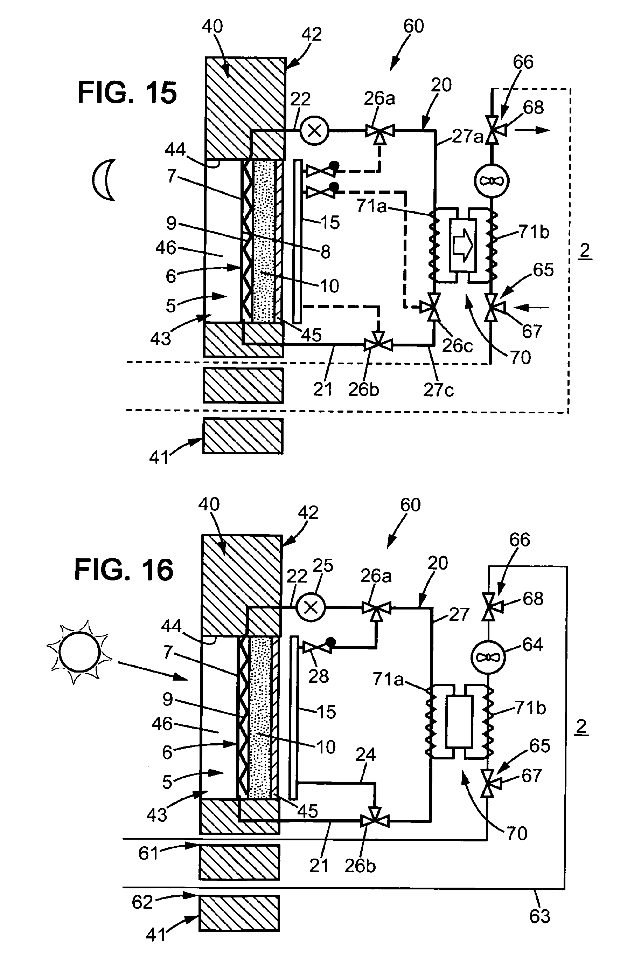

Sur les figures 14 et 15, l'absence de rayonnement solaire, par exemple la nuit, peut être détectée par l'unité centrale lorsque la température du fluide caloporteur en sortie de la conduite de récupération 9 est située dans une deuxième plage prédéfinie de températures inférieures et éloignées de la température de consigne. Cette deuxième plage de températures peut être mémorisée dans la mémoire de l'unité centrale. Par exemple, la deuxième plage de températures comprend des températures inférieures aux températures de la première plage de températures.

Le système solaire thermique est alors mis dans un fonctionnement en chauffage thermodynamique, dans lequel on détermine s'il existe de l'énergie thermique stockée dans l'organe de stockage 10.

Sur la figure 14, si l'organe de stockage présente une température inférieure à la température du fluide caloporteur en sortie de la conduite de récupération 9 ou inférieure à la température extérieure, l'énergie thermique dans l'organe de stockage 10 est épuisée ou insuffisante, notamment par rapport à l'énergie thermique disponible dans l'air extérieur, on prélève l'énergie thermique dans l'air extérieur et on transfère à l'émetteur de chaleur 15 l'énergie thermique prélevée.

Pour ce faire, comme pour le fonctionnement en chauffage thermodynamique d'appoint, les premier 71a et deuxième 71 b échangeurs de la pompe à chaleur 70 constituent respectivement le condenseur et l'évaporateur.

L'unité centrale commande la première vanne trois voies 26a pour connecter la première portion 27a de la conduite de dérivation à la conduite d'entrée 23 d'émetteur de chaleur. La deuxième vanne trois voies 26b est commandée pour connecter la troisième portion 27c de la conduite de dérivation à la conduite de sortie 24 d'émetteur de chaleur. Quant à la troisième vanne trois voies 26c, elle est commandée pour connecter les première 27a et troisième 27c portions de la conduite de dérivation.

On fait alors circuler, par exemple par l'intermédiaire du dispositif d'entraînement de la pompe à chaleur 70, le fluide caloporteur dans la première portion 27a de la conduite de dérivation où le fluide caloporteur comme source chaude prélève l'énergie thermique au réfrigérant de la pompe à chaleur 70 lors de son passage dans le condenseur formé par le premier échangeur 71 a. On fait ensuite circuler le fluide caloporteur dans la conduite d'entrée 23 d'émetteur de chaleur, dans l'émetteur de chaleur 15, dans la conduite de sortie 24 d'émetteur de chaleur, dans la troisième portion 27c de la conduite de dérivation puis à nouveau dans première portion 27a de la conduite de dérivation.

En revanche, sur la figure 15, si au cours d'une étape préalable, de l'énergie thermique a été stockée dans l'organe de stockage 10 comme décrit précédemment et quelle n'est pas épuisée, l'organe de stockage 10 présente une température supérieure à la température du fluide caloporteur en sortie de la conduite de récupération 9 et, si la température de l'organe de stockage 10 est supérieure ou égale à la température extérieure, il est possible de prélever l'énergie thermique stockée dans l'organe de stockage 10 et de la transférer à l'air intérieur.

Pour ce faire, le premier échangeur 71 a de la pompe à chaleur constitue l'évaporateur et le deuxième échangeur 71 b de la pompe à chaleur constitue le condenseur.

Les vannes de reprise 65 et de rejet 66 d'air isolent la portion de gaine de circulation d'air 63 situées entre elles du reste de la gaine de circulation 63 et le ventilateur 64 crée une circulation d'air intérieur dans la gaine de circulation 63 entre la bouche de reprise d'air intérieure 67, par laquelle l'air intérieur est aspiré dans la gaine de circulation 63, et la bouche de soufflage d'air chaud 68, par laquelle l'air intérieur comme source chaude chauffé lors de son passage dans le condenseur formé par le deuxième échangeur 71 b est expulsé. Le débit d'air imposé par le ventilateur 64 est alors de préférence de l'ordre de 0,05 kg/s à 0,1 kg/s.

L'unité centrale commande la première vanne trois voies 26a pour connecter la première portion 27a de la conduite de dérivation à la conduite de sortie 22 de conduite de récupération. La deuxième vanne trois voies 26b est commandée pour connecter la troisième portion 27c de la conduite de dérivation à la conduite d'entrée 21 de conduite de récupération. La troisième vanne trois voies 26c est commandée pour connecter les première 27a et troisième 27c portions de la conduite de dérivation.

L'unité centrale commande le dispositif de circulation 25 pour faire circuler le fluide caloporteur dans la conduite de récupération 9 où il puise l'énergie thermique stockée dans l'organe de stockage 10. Le fluide caloporteur circule ensuite dans la conduite de sortie 22 de conduite de récupération puis la première portion 27a de la conduite de dérivation où le réfrigérant prélève l'énergie thermique du fluide calorifique lors de son passage dans l'évaporateur formé par le premier échangeur 71 a. Le fluide caloporteur retourne ensuite à la conduite de récupération 9 par l'intermédiaire de la troisième portion 27c de la conduite de dérivation et la conduite d'entrée 21 de conduite de récupération.

Dans ce mode de fonctionnement, l'organe de stockage 10 auquel de l'énergie thermique est prélevée forme la source froide du système thermodynamique, garantissant ainsi une exploitation efficace et intégrale du rayonnement solaire convertie en énergie thermique.

Dans le système solaire thermique 60 selon le deuxième mode de réalisation, le capteur solaire thermique 5 peut servir successivement d'échangeur pour la source chaude de la pompe à chaleur 70 puis d'échangeur pour la source froide de la pompe à chaleur 70. Cette disposition permet en particulier, d'améliorer le coefficient de performance de la pompe à chaleur lorsqu'elle doit répondre au besoin de chauffage.

Un tel système solaire thermique offre des performances améliorées du fait des différents modes de fonctionnement possibles. La pompe à chaleur 70 tire en particulier bénéfice du fait qu'elle travaille avec une source froide dont la température est fréquemment supérieure à l'air extérieur, notamment du fait du rayonnement solaire et du stockage.

En variante représentée sur la figure 16, la conduite de dérivation 27 est limitée à la première portion 27a décrite ci-dessus et qui est alors connectée, d'une part, à la première vanne trois voies 26a et, d'autre part, à la deuxième vanne trois voies 26b. Cette variante présente les mêmes modes de fonctionnement que ceux décrits ci-dessus à l'exception du fonctionnement en chauffage thermodynamique d'appoint.

Par ailleurs, le système solaire thermique 60 selon le deuxième mode de réalisation a été décrit en relation avec un élément de paroi et un organe de stockage. Ces éléments pourraient, toutefois, constituer des composants optionnels. Dans une autre variante non illustrée, le capteur solaire thermique 5 pourrait être dépourvu d'organe de stockage 10 de sorte que le système solaire thermique 60 réalise le mode de fonctionnement en chauffage solaire, le mode de réalisation en chauffage thermodynamique d'appoint ainsi que le mode de fonctionnement en chauffage thermodynamique correspondant au cas où l'énergie thermique stockée est épuisée.

## Revendications

1. Système solaire thermique (1 ; 60) pour chauffer un espace habitable (2), comprenant :
- un élément de paroi (40 ; 50) destiné à être incorporé dans une paroi d'un bâtiment délimitant l'espace habitable (2), l'élément de paroi (40 ; 50) présentant des première (41) et deuxième (42) faces opposées et comportant intérieurement un logement (43) ouvert sur la première face (41), la première face (41) étant destinée à être exposée au rayonnement solaire,
- au moins un capteur solaire thermique (5) comprenant une conduite de récupération (9) thermiquement conductrice, adaptée pour recevoir un fluide caloporteur et portant extérieurement une surface d'absorption (7) du rayonnement solaire, le capteur solaire thermique (5) étant placé à l'intérieur du logement (43) avec la surface d'absorption (7) sur la première face (41) de l'élément de paroi (40 ; 50), le capteur solaire thermique (5) comprenant en outre un organe de stockage (10) d'énergie thermique placé dans le logement (43) de l'élément de paroi (40 ; 50) en contact avec la conduite de récupération (9) à l'opposé de la surface d'absorption (7),
- au moins un émetteur de chaleur (15) adapté pour recevoir le fluide caloporteur et connecté au capteur solaire thermique (5), l'émetteur de chaleur (15) s'étendant sur la deuxième face (42) de l'élément de paroi (40 ; 50),
ledit système solaire thermique (1 ; 60) étant **caractérisé en ce que** la conduite de récupération (9) comporte une entrée et une sortie noyées dans l'élément de paroi (40 ; 50), la sortie de la conduite de récupération (9) débouchant sur une première surface de connexion de l'élément de paroi (40 ; 50), et l'entrée de la conduite de récupération (9) débouchant sur une deuxième surface de connexion de l'élément de paroi (40 ; 50).

2. Système solaire thermique (1 ; 60) selon la revendication 1, dans lequel le logement (43) est ouvert sur la deuxième face (42) de l'élément de paroi (40 ; 50), l'émetteur de chaleur (15) étant placé en regard et à distance de l'organe de stockage (10), le système solaire thermique (1 ; 60) comprenant en outre une couche d'isolation thermique (45) interposée entre l'organe de stockage (10) et l'émetteur de chaleur (15).

3. Système solaire thermique (1 ; 60) selon l'une quelconque des revendications 1 et 2, dans lequel les première et deuxième surfaces de connexion sont opposées l'une par rapport à l'autre et s'étendent entre les première (41) et deuxième (42) faces de l'élément de paroi (40 ; 50).

4. Système solaire thermique (1 ; 60) selon la revendication 3, comprenant au moins un premier (50a) et un deuxième (50b) éléments de paroi, au moins un premier et un deuxième capteurs solaires thermiques (5) placés respectivement dans les logements (43) des premier (50a) et deuxième (50b) éléments de paroi, et au moins un émetteur de chaleur (15) s'étendant sur au moins l'une des deuxièmes faces (42) des premier (50a) et deuxième (50b) éléments de paroi, la première surface de connexion du premier élément de paroi (50a) étant en contact avec la deuxième surface de connexion du deuxième élément de paroi (50b), la sortie de la conduite de récupération (9) du premier capteur solaire thermique (5) étant connectée à l'entrée de la conduite de récupération (9) du deuxième capteur solaire thermique (5).

5. Système solaire thermique (1 ; 60) selon l'une quelconque des revendications 1 à 4, dans lequel l'émetteur de chaleur (15) comporte une entrée et une sortie noyées dans l'élément de paroi (40 ; 50), l'entrée de l'émetteur de chaleur (15) débouchant sur la première surface de connexion de l'élément de paroi (40 ; 50), la sortie de l'émetteur de chaleur (15) débouchant sur la deuxième surface de connexion de l'élément de paroi (40 ; 50).

6. Système solaire thermique (1 ; 60) selon l'une quelconque des revendications 1 à 5, dans lequel l'organe de stockage (10) est adapté pour réaliser un stockage thermique sensible.

7. Système solaire thermique (1 ; 60) selon la revendication 6, dans lequel l'organe de stockage (10) présente une chaleur spécifique comprise entre 800 J/Kg.K et 1500 J/Kg.K.

8. Système solaire thermique (1 ; 60) selon l'une quelconque des revendications 1 à 5, dans lequel l'organe de stockage (10) est adapté pour réaliser un stockage thermique latent.

9. Système solaire thermique (1 ; 60) selon la revendication 8, dans lequel l'organe de stockage (10) est constitué d'un matériau à changement de phase présentant une température de fusion comprise entre 15°C et 45 °C et une chaleur latente de fusion comprise entre 50 kJ/kg et 250 kJ/kg.

10. Système solaire thermique (1) selon l'une quelconque des revendications 1 à 9, dans lequel l'élément de paroi (40 ; 50) présente une surface intérieure (44) délimitant le logement (43), la surface intérieure (44) comprenant au moins localement une surface réfléchissante (48) agencée pour orienter le rayonnement solaire qui atteint ladite surface réfléchissante (48) vers la surface d'absorption (7).

11. Système solaire thermique (1 ; 60) selon l'une quelconque des revendications 1 à 10, comprenant en outre une paroi transparente (46) au rayonnement solaire et isolante thermiquement placée sur la face avant de l'élément de paroi (40 ; 50), en regard de la surface d'absorption (7) du capteur solaire thermique (5).

12. Système solaire thermique (1) selon l'une quelconque des revendications 1 à 11, dans lequel l'élément de paroi (40 ; 50) comprend en outre une couche d'isolation thermique (47) sur la première face (41), autour du logement (43).

13. Système solaire thermique (60) selon l'une quelconque des revendications 1 à 12, dans lequel la conduite de récupération (9) et l'émetteur de chaleur (15) comporte chacun une entrée et une sortie pour le fluide caloporteur, le système solaire thermique (60) comprenant en outre :
- un fluide caloporteur,
- une pompe à chaleur (70) qui comporte deux échangeurs (71) formant l'un un évaporateur, et l'autre un condenseur,
- un circuit d'air extérieur,
- un circuit d'air intérieur,
- un circuit de diffusion (20) adapté pour recevoir le fluide caloporteur et commandé pour :
- dans un fonctionnement en chauffage solaire, lorsque le fluide caloporteur en sortie de la conduite de récupération (9) présente une température supérieure à une température de consigne pour le fluide caloporteur, connecter la sortie de la conduite de récupération (9) à l'entrée de l'émetteur de chaleur (15), connecter la sortie de l'émetteur de chaleur (15) à l'entrée de la conduite de récupération (9), et faire circuler le fluide caloporteur de sorte à transférer à l'émetteur de chaleur (15) une énergie thermique absorbée par la surface d'absorption (7),
- dans un fonctionnement en chauffage thermodynamique, lorsque le fluide caloporteur en sortie de la conduite de récupération (9) présente une température située dans une plage prédéfinie de températures inférieures à la température de consigne pour le fluide caloporteur,
si l'organe de stockage (10) présente une température supérieure à la température du fluide caloporteur en sortie de la conduite de récupération (9) et si la température de l'organe de stockage (10) est supérieure ou égale à une température extérieure à l'extérieur de l'espace habitable, connecter la sortie de la conduite de récupération (9) à l'entrée de la conduite de récupération (9) au travers de l'évaporateur de la pompe à chaleur (70), connecter le condenseur de la pompe à chaleur (70) au circuit d'air intérieur, et faire circuler le fluide caloporteur de sorte à transférer à l'air intérieur une énergie thermique stockée dans l'organe de stockage (10),
sinon, si l'organe de stockage (10) présente une température inférieure à la température du fluide caloporteur en sortie de la conduite de récupération (9) ou si la température de l'organe de stockage (10) est inférieure à la température extérieure, connecter l'évaporateur de la pompe à chaleur (70) au circuit d'air extérieur, et connecter la sortie de l'émetteur de chaleur (15) à l'entrée de l'émetteur de chaleur (15) au travers du condenseur de la pompe à chaleur (70), de sorte à transférer à l'émetteur de chaleur (15) l'énergie thermique prélevée dans l'air extérieur.

14. Système solaire thermique (60) selon la revendication 13, dans lequel le circuit de diffusion (20) est en outre commandé pour, dans un fonctionnement en chauffage thermodynamique d'appoint, lorsque le fluide caloporteur en sortie de la conduite de récupération (9) présente une température située dans une plage prédéfinie de températures inférieures et proches de la température de consigne pour le fluide caloporteur, connecter l'évaporateur de la pompe à chaleur (70) au circuit d'air extérieur, connecter la sortie de la conduite de récupération (9) à l'entrée de l'émetteur de chaleur (15) au travers du condenseur de la pompe à chaleur (70), connecter la sortie de l'émetteur de chaleur (15) à l'entrée de la conduite de récupération (9), et faire circuler le fluide caloporteur de sorte à transférer à l'émetteur de chaleur (15) l'énergie thermique absorbée par la surface d'absorption (7) et l'énergie thermique prélevée dans l'air extérieur.

## Patentansprüche

1. Thermische Solaranlage (1; 60) zur Erwärmung eines Wohnraums (2), die enthält:
- ein Wandelement (40; 50), das dazu bestimmt ist, in eine den Wohnraum (2) begrenzende Wand eines Gebäudes eingebaut zu werden, wobei das Wandelement (40; 50) erste (41) und zweite (42) gegenüberliegende Seiten hat und innen eine zur ersten Seite (41) offene Aufnahme (43) aufweist, wobei die erste Seite (41) dazu bestimmt ist, der Sonnenstrahlung ausgesetzt zu sein,
- mindestens einen thermischen Solarkollektor (5), der eine wärmeleitende Rückgewinnungsleitung (9) enthält, die ausgebildet ist, ein Wärmeträgerfluid zu empfangen, und außen eine Absorptionsfläche (7) der Sonnenstrahlung trägt, wobei der thermische Solarkollektor (5) im Inneren der Aufnahme (43) mit der Absorptionsfläche (7) auf der ersten Seite (41) des Wandelements (40; 50) angeordnet ist, wobei der thermische Solarkollektor (5) außerdem ein Wärmeenergie-Speicherorgan (10) enthält, das in der Aufnahme (43) des Wandelements (40; 50) entgegengesetzt zur Absorptionsfläche (7) in Kontakt mit der Rückgewinnungsleitung (9) angeordnet ist,
- mindestens einen Heizkörper (15), der ausgebildet ist, das Wärmeträgerfluid zu empfangen, und mit dem thermischen Solarkollektor (5) verbunden ist, wobei der Heizkörper (15) sich auf der zweiten Seite (42) des Wandelements (40; 50) erstreckt,
wobei die thermische Solaranlage (1; 60) **dadurch gekennzeichnet ist, dass** die Rückgewinnungsleitung (9) einen Eingang und einen Ausgang aufweist, die in das Wandelement (40; 50) versenkt sind, wobei der Ausgang der Rückgewinnungsleitung (9) an einer ersten Verbindungsfläche des Wandelements (40; 50) mündet, und der Eingang der Rückgewinnungsleitung (9) an einer zweiten Verbindungsfläche des Wandelements (40; 50) mündet.

2. Thermische Solaranlage (1; 60) nach Anspruch 1, wobei die Aufnahme (43) an der zweiten Seite (42) des Wandelements (40; 50) offen ist, wobei der Heizkörper (15) vor dem und in Abstand zum Speicherorgan (10) angeordnet ist, wobei die thermische Solaranlage (1; 60) außerdem eine thermische Isolierschicht (45) zwischen dem Speicherorgan (10) und dem Heizkörper (15) enthält.

3. Thermische Solaranlage (1; 60) nach einem der Ansprüche 1 und 2, wobei die erste und zweite Verbindungsfläche einander gegenüber liegen und sich zwischen der ersten (41) und der zweiten (42) Seite des Wandelements (40; 50) erstrecken.

4. Thermische Solaranlage (1; 60) nach Anspruch 3, die mindestens ein erstes (50a) und ein zweites (50b) Wandelement, mindestens einen ersten und einen zweiten thermischen Solarkollektor (5), die in den Aufnahmen (43) des ersten (50a) bzw. zweiten (50b) Wandelements angeordnet sind, und mindestens einen Heizkörper (15) enthält, der sich auf mindestens einer der zweiten Seiten (42) der ersten (50a) und zweiten (50b) Wandelemente erstreckt, wobei die erste Verbindungsfläche des ersten Wandelements (50a) mit der zweiten Verbindungsfläche des zweiten Wandelements (50b) in Kontakt ist, wobei der Ausgang der Rückgewinnungsleitung (9) des ersten thermischen Solarkollektors (5) mit dem Eingang der Rückgewinnungsleitung (9) des zweiten thermischen Solarkollektors (5) verbunden ist.

5. Thermische Solaranlage (1; 60) nach einem der Ansprüche 1 bis 4, wobei der Heizkörper (15) einen Eingang und einen Ausgang aufweist, die in das Wandelement (40; 50) versenkt sind, wobei der Eingang des Heizkörpers (15) an der ersten Verbindungsfläche des Wandelements (40; 50) mündet, wobei der Ausgang des Heizkörpers (15) an der zweiten Verbindungsfläche des Wandelements (40; 50) mündet.

6. Thermische Solaranlage (1; 60) nach einem der Ansprüche 1 bis 5, wobei das Speicherorgan (10) ausgebildet ist, eine sensible Wärmespeicherung durchzuführen.

7. Thermische Solaranlage (1; 60) nach Anspruch 6, wobei das Speicherorgan (10) eine spezifische Wärme zwischen 800 J/Kg.K und 1500 J/Kg.K aufweist.

8. Thermische Solaranlage (1; 60) nach einem der Ansprüche 1 bis 5, wobei das Speicherorgan (10) ausgebildet ist, eine latente Wärmespeicherung durchzuführen.

9. Thermische Solaranlage (1; 60) nach Anspruch 8, wobei das Speicherorgan (10) aus einem Phasenwechselmaterial besteht, das eine Schmelztemperatur zwischen 15°C und 45°C und eine latente Schmelzwärme zwischen 50 kJ/kg und 250 kJ/kg aufweist.

10. Thermische Solaranlage (1) nach einem der Ansprüche 1 bis 9, wobei das Wandelement (40; 50) eine Innenfläche (44) aufweist, die die Aufnahme (43) begrenzt, wobei die Innenfläche (44) mindestens lokal eine Reflexionsfläche (48) enthält, die eingerichtet ist, um die die Reflexionsfläche (48) erreichende Sonnenstrahlung zur Absorptionsfläche (7) zu richten.

11. Thermische Solaranlage (1; 60) nach einem der Ansprüche 1 bis 10, die außerdem eine für die Sonnenstrahlung durchlässige und thermisch isolierende Wand (46) enthält, die an der Vorderseite des Wandelements (40; 50) gegenüber der Absorptionsfläche (7) des thermischen Solarkollektors (5) angeordnet ist.

12. Thermische Solaranlage (1) nach einem der Ansprüche 1 bis 11, wobei das Wandelement (40; 50) außerdem eine thermische Isolierschicht (47) auf der ersten Seite (41) um die Aufnahme (43) herum enthält.

13. Thermische Solaranlage (60) nach einem der Ansprüche 1 bis 12, wobei die Rückgewinnungsleitung (9) und der Heizkörper (15) je einen Eingang und einen Ausgang für das Wärmeträgerfluid aufweisen, wobei die thermische Solaranlage (60) außerdem enthält:
- ein Wärmeträgerfluid,
- eine Wärmepumpe (70), die zwei Tauscher (71) aufweist, von denen einer einen Verdampfer und der andere einen Kondensator formt,
- einen Außenluftkreislauf,
- einen Innenluftkreislauf,
- einen Verteilungskreislauf (20), der ausgebildet ist, das Wärmeträgerfluid zu empfangen, und gesteuert wird, um:
- bei einem Betrieb mit Solarheizung, wenn das Wärmeträgerfluid am Ausgang der Rückgewinnungsleitung (9) eine höhere Temperatur als eine Solltemperatur für das Wärmeträgerfluid aufweist, den Ausgang der Rückgewinnungsleitung (9) mit dem Eingang des Heizkörpers (15) zu verbinden, den Ausgang des Heizkörpers (15) mit dem Eingang der Rückgewinnungsleitung (9) zu verbinden, und das Wärmeträgerfluid so zirkulieren zu lassen, dass eine von der Absorptionsfläche (7) absorbierte Wärmeenergie an den Heizkörper (15) übertragen wird,
- bei einem Betrieb als thermodynamische Heizung, wenn das Wärmeträgerfluid am Ausgang der Rückgewinnungsleitung (9) eine Temperatur hat, die sich in einem vordefinierten Bereich von Temperaturen niedriger als die Solltemperatur für das Wärmeträgerfluid befindet,
wenn das Speicherorgan (10) eine höhere Temperatur als die Temperatur des Wärmeträgerfluids am Ausgang der Rückgewinnungsleitung (9) hat, und wenn die Temperatur des Speicherorgans (10) höher als eine oder gleich einer Außentemperatur außerhalb des Wohnraums ist, den Ausgang der Rückgewinnungsleitung (9) mit dem Eingang der Rückgewinnungsleitung (9) über den Verdampfer der Wärmepumpe (70) zu verbinden, den Kondensator der Wärmepumpe (70) mit dem Innenluftkreislauf zu verbinden, und das Wärmeträgerfluid so zirkulieren zu lassen, dass eine im Speicherorgan (10) gespeicherte Wärmeenergie an die Innenluft übertragen wird,
sonst, wenn das Speicherorgan (10) eine niedrigere Temperatur als die Temperatur des Wärmeträgerfluids am Ausgang der Rückgewinnungsleitung (9) hat, oder wenn die Temperatur des Speicherorgans (10) niedriger ist als die Außentemperatur, den Verdampfer der Wärmepumpe (70) mit dem Außenluftkreis zu verbinden, und den Ausgang des Heizkörpers (15) über den Kondensator der Wärmepumpe (70) mit dem Eingang des Heizkörpers (15) zu verbinden, um die in der Außenluft entnommene Wärmeenergie an den Heizkörper (15) zu übertragen.

14. Thermische Solaranlage (60) nach Anspruch 13, wobei der Verteilungskreislauf (20) außerdem gesteuert wird, um bei einem Betrieb als thermodynamische Zusatzheizung, wenn das Wärmeträgerfluid am Ausgang der Rückgewinnungsleitung (9) eine Temperatur hat, die sich in einem vordefinierten Bereich von Temperaturen niedriger als die und nahe der Solltemperatur für das Wärmeträgerfluid befindet, den Verdampfer der Wärmepumpe (70) mit dem Außenluftkreislauf zu verbinden, den Ausgang der Rückgewinnungsleitung (9) über den Kondensator der Wärmepumpe (70) mit dem Eingang des Heizkörpers (15) zu verbinden, den Ausgang des Heizkörpers (15) mit dem Eingang der Rückgewinnungsleitung (9) zu verbinden, und das Wärmeträgerfluid so zirkulieren zu lassen, dass die von der Absorptionsfläche (7) absorbierte Wärmeenergie und die in der Außenluft entnommene Wärmeenergie an den Heizkörper (15) übertragen wird.

## Claims

1. Solar heating system (1; 60) for heating a habitable space (2), comprising:
- a wall element (40; 50) designed to be incorporated in a wall of a building bounding the habitable space (2), the wall element (40; 50) having first (41) and second (42) opposing faces and having a housing (43) on the inside open at the first face (41), the first face (41) being designed to be exposed to solar radiation,
- at least one solar thermal collector (5) comprising a heat conductive recovery pipe (9) configured to receive a heat exchange fluid and having on the outside a surface (7) for absorbing solar radiation, the solar thermal collector (5) being positioned inside the housing (43) with the absorption surface (7) on the first face (41) of the wall element (40; 50), the solar thermal collector (5) further comprising an element (10) for storing thermal energy disposed in the housing (43) of the wall element (40; 50) in contact with the recovery pipe (9) opposite the absorption surface (7),
- at least one heat transmitter (15) configured to receive the heat exchange fluid and connected to the solar thermal collector (5), the heat transmitter (15) extending on the second face (42) of the wall element (40; 50),
said solar heating system (1; 60) being **characterised in that** the recovery pipe (9) has an inlet and an outlet embedded in the wall element (40; 50), the outlet of the recovery pipe (9) opening onto a first connection surface of the wall element (40; 50) and the inlet of the recovery pipe (9) opening onto a second connection surface of the wall element (40; 50).

2. Solar heating system (1; 60) as claimed in claim 1, wherein the housing (43) is open at the second face (42) of the wall element (40; 50), the heat transmitter (15) being positioned facing and at a distance from the storage element (10), the solar heating system (1; 60) further comprising a thermal insulation layer (45) interposed between the storage element (10) and the heat transmitter (15).

3. Solar heating system (1; 60) as claimed in any one of claims 1 and 2, wherein the first and second connection surfaces are disposed opposite one another and extend between the first (41) and second (42) faces of the wall element (40; 50).

4. Solar heating system (1; 60) as claimed in claim 3, comprising at least a first (50a) and a second (50b) wall element, at least a first and a second solar thermal collector (5) positioned respectively in the housings (43) of the first (50a) and second (50b) wall elements, and at least one heat transmitter (15) extending on at least one of the second faces (42) of the first (50a) and second (50b) wall elements, the first connection surface of the first wall element (50a) being in contact with the second connection surface of the second wall element (50b), the outlet of the recovery pipe (9) of the first solar thermal collector (5) being connected to the inlet of the recovery pipe (9) of the second solar thermal collector (5).

5. Solar heating system (1; 60) as claimed in any one of claims 1 to 4, wherein the heat transmitter (15) has an inlet and an outlet embedded in the wall element (40; 50), the inlet of the heat transmitter (15) opening onto the first connection surface of the wall element (40; 50), the outlet of the heat transmitter (15) opening onto the second connection surface of the wall element (40; 50).

6. Solar heating system (1; 60) as claimed in any one of claims 1 to 5, wherein the storage element (10) is configured to store sensible heat.

7. Solar heating system (1; 60) as claimed in claim 6, wherein the storage element (10) has a specific heat of between 800 J/Kg.K and 1500 J/Kg.K.

8. Solar heating system (1; 60) as claimed in any one of claims 1 to 5, wherein the storage element (10) is configured to store latent heat.

9. Solar heating system (1; 60) as claimed in claim 8, wherein the storage element (10) is made from a phase change material having a melting temperature of between 15°C and 45°C and a latent heat of fusion of between 50 kJ/kg and 250 kJ/kg.

10. Solar heating system (1) as claimed in any one of claims 1 to 9, wherein the wall element (40; 50) has an internal surface (44) bounding the housing (43), the internal surface (44) comprising at least locally a reflecting surface (48) for directing the solar radiation hitting said reflecting surface (48) towards the absorption surface (7).

11. Solar heating system (1; 60) as claimed in any one of claims 1 to 10, further comprising a wall (46) transparent to solar radiation and thermally insulating positioned on the front face of the wall element (40; 50) facing the absorption surface (7) of the solar thermal collector (5).

12. Solar heating system (1) as claimed in any one of claims 1 to 11, wherein the wall element (40; 50) further comprises a thermal insulation layer (47) on the first face (41) around the housing (43).

13. Solar heating system (60) as claimed in any one of claims 1 to 12, wherein the recovery pipe (9) and the heat transmitter (15) each have an inlet and an outlet for the heat exchange fluid, the solar heating system (60) further comprising:
- a heat exchange fluid,
- a heat pump (70) which has two exchangers (71), one forming an evaporator and the other a condenser,
- an outside air circuit,
- an inside air circuit,
- a diffusion circuit (20) configured to receive the heat exchange fluid and controlled so as to:
- in a solar heating mode, when the heat exchange fluid at the outlet of the recovery pipe (9) is at a temperature higher than a setpoint temperature for the heat exchange fluid, to connect the outlet of the recovery pipe (9) to the inlet of the heat transmitter (15), connect the outlet of the heat transmitter (15) to the inlet of the recovery pipe (9) and circulate the heat exchange fluid so as to transfer thermal energy absorbed by the absorption surface (7) to the heat transmitter (15),
- in a thermodynamic heating mode, when the heat exchange fluid at the outlet of the recovery pipe (9) is at a temperature within a predefined range of temperatures lower than the setpoint temperature for the heat exchange fluid,
if the storage element (10) is at a temperature higher than the temperature of the heat exchange fluid at the outlet of the recovery pipe (9) and if the temperature of the storage element (10) is higher than or equal to an external temperature outside the habitable space, to connect the outlet of the recovery pipe (9) to the inlet of the recovery pipe (9) via the evaporator of the heat pump (70), connect the condenser of the heat pump (70) to the inside air circuit and circulate the heat exchange fluid so as to transfer thermal energy stored in the storage element (10) to the inside air,
otherwise, if the storage element (10) is at a temperature lower than the temperature of the heat exchange fluid at the outlet of the recovery pipe (9) or if the temperature of the storage element (10) is lower than the outside temperature, to connect the evaporator of the heat pump (70) to the outside air circuit and connect the outlet of the heat transmitter (15) to the inlet of the heat transmitter (15) via the condenser of the heat pump (70) so as to transfer thermal energy picked up from the outside air to the heat transmitter (15).

14. Solar heating system (60) as claimed in claim 13, wherein the diffusion circuit (20) is additionally controlled, in a thermodynamic booster heating mode, when the heat exchange fluid at the outlet of the recovery pipe (9) is at a temperature within a predefined range of temperatures lower than and close to the setpoint temperature for the heat exchange fluid, to connect the evaporator of the heat pump (70) to the outside air circuit, connect the outlet of the recovery pipe (9) to the inlet of the heat transmitter (15) via the condenser of the heat pump (70), connect the outlet of the heat transmitter (15) to the inlet of the recovery pipe (9) and circulate the heat exchange fluid so as to transfer the thermal energy absorbed by the absorption surface (7) and the thermal energy picked up from the outside air to the heat transmitter (15).
